(19) Europäisches Patentamt / European Patent Office / Office européen des brevets

(11) EP 3 372 728 B1

(12) EUROPEAN PATENT SPECIFICATION

(45) Date of publication and mention of the grant of the patent: **13.01.2021 Bulletin 2021/02**

(21) Application number: **16862201.7**

(22) Date of filing: **04.11.2016**

(51) Int Cl.:
***D06M 15/55*** *(2006.01)*
***C08J 5/24*** *(2006.01)*
***D06M 15/263*** *(2006.01)*
***D06M 15/273*** *(2006.01)*
***D06M 15/564*** *(2006.01)*

(86) International application number: **PCT/JP2016/082815**

(87) International publication number: **WO 2017/078142 (11.05.2017 Gazette 2017/19)**

# (54) CONTINUOUS CARBON FIBER BUNDLE, SHEET MOLDING COMPOUND, AND FIBER-REINFORCED COMPOSITE MATERIAL TO BE MOLDED USING THE SAME

KONTINUIERLICHES KOHLENSTOFFFASERBÜNDEL, HARZMATTE UND FASERVERSTÄRKTES VERBUNDMATERIAL ZUR FORMUNG DAMIT

FAISCEAU DE FIBRES DE CARBONE CONTINUES, COMPOSÉ DE MOULAGE EN FEUILLE, ET MATÉRIAU COMPOSITE RENFORCÉ DE FIBRES À MOULER L'UTILISANT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **05.11.2015 JP 2015217697**
**31.08.2016 JP 2016169560**

(43) Date of publication of application: **12.09.2018 Bulletin 2018/37**

(73) Proprietor: **Mitsubishi Chemical Corporation**
**Tokyo 100-8251 (JP)**

(72) Inventors:
- **SINMEN, Yuusuke**
**Tokyo 1008251 (JP)**
- **MIURA, Kento**
**Tokyo 1008251 (JP)**
- **IMURA, Hiroyuki**
**Tokyo 1008251 (JP)**

(74) Representative: **Hoffmann Eitle**
**Patent- und Rechtsanwälte PartmbB**
**Arabellastraße 30**
**81925 München (DE)**

(56) References cited:
**JP-A- H1 181 146**
**JP-A- H1 181 146**
**JP-A- H07 197 381**
**JP-A- 2005 280 124**
**JP-A- 2009 191 238**
**JP-A- 2012 246 583**
**JP-A- 2013 202 890**
**JP-A- 2013 203 773**
**JP-A- 2016 155 912**
**JP-A- 2016 160 549**
**JP-A- 2016 160 549**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 372 728 B1

## Description

[Technical Field]

The present invention relates to a continuous carbon fiber bundle, a sheet molding compound and a fiber-reinforced composite material to be molded using the same.

Priority is claimed on Japanese Patent Application No. 2015-217697, filed November 5, 2015, and Japanese Patent Application No. 2016-169560, filed August 31, 2016.

[Background Art]

A structure made of a fiber-reinforced resin is used in a broad range of fields related to industrial applications such as sports and leisure applications, aircrafts, ships, railroad vehicles, and automobiles because it has a high strength and high rigidity. In addition, a method of producing a structure made of a fiber-reinforced resin by compression molding is widely performed. As a molding material, a prepreg obtained by impregnating a thermosetting resin into reinforcing fibers, a sheet molding compound (hereinafter referred to as an SMC), and the like are used.

In an SMC, since discontinuous fibers with a short fiber length are used, there is a problem of mechanical properties of a structure made of a fiber-reinforced resin degrading compared to a prepreg in which continuous fibers are generally used. However, since a material is flowed and filled into a mold, it is suitable for forming a complicated shape having fine irregularities which is difficult to mold with a prepreg.

Among reinforcing fibers, carbon fibers have the largest specific strength and specific elastic modulus and the weight of a component can be significantly reduced therewith. Therefore, carbon fibers have been utilized in the above fields, and glass fibers for reinforcing fibers used in an SMC in the related art have been replaced with carbon fibers.

Carbon fibers are usually used in the form of strands in which tens of thousands to hundreds of thousands of carbon fiber filaments with a single fiber thickness of several microns to several tens of microns are aggregated. (The number of carbon fiber filaments constituting a carbon fiber strand will be referred to below as the number of filaments and may be denoted without units: 1,000 is expressed as K in the industry, for example, 3,000 is referred to as 3 K)

In recent years, in order to reduce the cost of producing carbon fibers themselves and reduce the cost of producing components, carbon fiber strands having 10,000 (10 K) filaments or more have been utilized. Carbon fiber strands having 10,000 filaments or more are called thick strands because they are thick in appearance as a result of the large number of filaments (hereinafter referred to as "thick strands").

While thick strands cost less, a structure made of a fiber-reinforced resin using thick strands as reinforcing fibers may have degraded mechanical properties. For example, Non-Patent Literature 1 describes that, when the number of filaments of the carbon fiber strand increases, the strength and elastic modulus of a composite material obtained by SMC molding decrease.

JP 2013-202890 A relates to a molding material that can be made into a fiber reinforced plastic. The number of filaments in which specific reinforcing fibers (carbon fibers having a single fiber fineness of 1.0 to 2.4 dtex) having a fiber length in the range of 5 to 100 mm are aligned substantially in one direction. Of the chopped fiber bundle in the range of 10,000 to 700,000 pieces are integrated with a matrix resin and the ratio (Wm / tm) of the average width Wm of the chopped fiber bundle to the average thickness tm in the molding material is in the range of 70 to 1000, the average width Wm of the chopped fiber bundle is in the range of 2 to 50 mm, and the average thickness tm is in the range of 0.02 to 0.10 mm.

JP 2012-246583 A relates to a unidirectional reinforcement fabric formed using carbon fiber bundles. The unidirectional reinforcement fabric comprises warp yarns comprising carbon fiber bundles and weft yarns binding the warp yarns. The unidirectional reinforcement fabric satisfies the following conditions (a), (b) and (d), and satisfies the following conditions (c-1) and/or (c-2): (a) the unidirectional reinforcement fabric has a basis weight of 100 g/mor more and 500 g/mor less; (b) the unidirectional reinforcement fabric has a cantilever value of 170 mm or more; (c-1) the degree of single fiber orientation is 91% or more in the carbon fiber bundles forming the unidirectional reinforcement fabric; (c-2) the degree of single fiber orientation is 91% or more in the carbon fiber bundles forming a hardened material of the unidirectional reinforcement fabric and a resin; and (d) the roundness of a single fiber cross section is 92% or less in the carbon fiber bundles forming the unidirectional reinforcement fabric.

JP H11-81146 A relates to a chopped carbon fiber suitable for producing a carbon fiber reinforced resin using a thermoplastic resin as a matrix and a method for producing the same, and more particularly to a chopped carbon fiber having a large number of filaments and having a large total fineness (so-called large toe) as a raw material, and a method for manufacturing the chopped carbon fiber.

JP 2016-160549 A relates to a e sizing agent for carbon fibers that satisfies the following (1) to (4). (1) a compound (A) which is an ester compound of an epoxy compound having a plurality of epoxy groups in the molecule and an unsaturated monobasic acid and which has at least one epoxy group in the molecule, a cured product having a

tensile elongation of 40% or more of bifunctional type urethane acrylate oligomer compound (B), stearic acid ester compound (C) and surfactant (D). (2) the ratio of urethane acrylate oligomer (B) / compound (A) is 1/3 to 2/1. (3) The total proportion of the compound (A) and the urethane acrylate oligomer (B) in the total sizing component is 20 mass% or more. (4) The proportion of the stearic acid ester compound (C) in the total sizing component is 5 to 30% by mass.

[Citation List]

[Non-Patent Literature]

[Non-Patent Literature 1]

N. Tsuchiyama "The Mechanical Properties of Carbon Fiber SMC," Proceedings of the Fourth International Conference on Composite Materials ICCM-IV), 1982, p. 497-503

[Summary of Invention]

[Technical Problem]

The present invention has been made in view of the above problems in the related art and an object of the present invention is to provide a continuous carbon fiber bundle through which an SMC for molding a fiber-reinforced composite material exhibiting favorable mechanical properties can be easily obtained, an SMC including carbon fiber bundles obtained from the continuous carbon fiber bundle and a matrix resin composition, and a fiber-reinforced composite material to be molded using the same.

[Solution to Problem]

In order to solve the above problems, the present invention provides the following aspects. That is:

- a continuous carbon fiber bundle according to claims 1 and 2, and
- a sheet molding compound according to claims 7 and 8.

[Advantageous Effects of Invention]

When molding is performed using the sheet molding compound including carbon fiber bundles produced from the continuous carbon fiber bundle of the present invention and the matrix resin composition, it is possible to obtain a fiber-reinforced composite material exhibiting favorable mechanical properties.

[Brief Description of Drawings]

Fig. 1 is a comparison diagram showing a mass distribution of carbon fiber bundles with respect to the mass of carbon fiber bundles in Examples 1 to 3 and Comparative Examples 1 to 6.
Fig. 2 is a schematic diagram showing locations of nine test pieces in a cured sheet molding compound.
Fig. 3 is a schematic diagram showing an example in which carbon fiber bundle aggregates are collected.
Fig. 4 is a schematic diagram showing a device for measuring a coefficient of dynamic friction.

[Description of Embodiments]

An SMC of the present invention is an SMC including carbon fiber bundles having a single fiber fineness of 1.0 dtex or more and 2.4 dtex and a roundness of a cross section perpendicular to a fiber axis of single fibers of 0.7 or more and 0.9 or less, and a matrix resin composition. A fiber-reinforced composite material is molded using the SMC.
A continuous carbon fiber bundle of the present invention is obtained when a polyacrylonitrile-based continuous carbon fiber precursor fiber bundle is subjected to a flameproofing treatment, a pre-carbonization treatment, and a carbonization treatment, and is a bundle of carbon fibers with a length of 10 m or more, and preferably 100 m or more, with substantially no upper limit in length. The single fiber fineness is preferably 1.0 dtex or more and 2.4 dtex or less, more preferably 1.2 dtex or more and 2 dtex or less, and most preferably 1.4 dtex or more and 1.8 dtex or less. When the single fiber fineness is 1.0 dtex or more, favorable mechanical properties are obtained. When the single fiber fineness

is 2.4 dtex or less, it is possible to produce carbon fibers at low cost. There is no upper limit of the length of the continuous carbon fiber bundle. However, in consideration of uses such as transportation, 10,000 m or less is preferable.

In addition, the continuous carbon fiber bundle of the present invention has a roundness of a cross section perpendicular to a fiber axis of single fibers that is preferably 0.7 or more and 0.9 or less and more preferably 0.8 or more and 0.88 or less. When the roundness is 0.7 or more and 0.9 or less, it is possible to increase the content of carbon fibers in the SMC, and mechanical properties of the fiber-reinforced composite material are able to be maintained.

In addition, when diffusion of oxygen into single fibers constituting a precursor fiber bundle during the flameproofing treatment is not insufficient, a flameproofing reaction proceeds sufficiently. As a result, fluff in a carbonization process is reduced, and the strength and elastic modulus of the obtained continuous carbon fiber bundle can be appropriately maintained.

Here, the roundness is a value obtained by the following Formula (1), in which S denotes a sectional area of a single fiber obtained when a cross section perpendicular to a fiber axis of a single fiber is observed under an SEM and is subjected to image analysis, and similarly, L denotes a length of a circumference of a cross section of a single fiber.

$$\text{Roundness} = 4\pi S/L^2 \cdots (1)$$

The fiber length of the carbon fiber bundles included in the SMC of the present invention may be a length that is used in a general SMC of about 1 inch (25.4 mm). The length is not particularly limited, and is preferably 12 mm or more and 75 mm or less. When the length is 12 mm or more, the strength of the composite material obtained by molding the SMC is excellent, and when the length is 75 mm or less, fluidity when the SMC is molded is excellent.

In addition, the continuous carbon fiber bundle of the present invention has a coefficient of dynamic friction of 1.4 or less with respect to a hard chrome-plated surface with an arithmetic average roughness (Ra) of 0.63 $\mu$m, a maximum height (Rmax) of 6.8 $\mu$, a ten-point average roughness (Rz) of 5.45 $\mu$m, an average peak height (Rpm) of 2.11 $\mu$m and a peak count (Pc) of 24.2 measured according to JIS B0601, and has a total fineness of 50,000 dtex or more. Preferably, the coefficient of dynamic friction is 1.3 or less and the total fineness is 80,000 dtex or more. When the coefficient of dynamic friction is 1.4 or less and the total fineness is 50,000 dtex or more, in a general SMC production process, the bundle can be cut into short small pieces, which are dropped and accumulate, and thus the small pieces are divided into a plurality of carbon fiber bundles.

In addition, the continuous carbon fiber bundle of the present invention has an interlacing value per thickness of 1 mm of the fiber bundle of 100 or less. The interlacing value per thickness of 1 mm is preferably 70 or less. When the interlacing value per thickness of 1 mm is 100 or less, in the general SMC production process, the bundle can be cut into short small pieces, dropped and accumulate, and thus the small pieces are divided into a plurality of carbon fiber bundles.

In addition, in the SMC of the present invention, small pieces that are specific sections in a lengthwise direction of a continuous carbon fiber bundle as a raw material of the carbon fiber bundles included in the SMC are present without change or divided into two or more parts. In a carbon fiber bundle including the maximum number of single fibers, small pieces that are specific sections in the lengthwise direction of the continuous carbon fiber bundle remain without change. In the carbon fiber bundles included in the SMC of the present invention, a mode value in a mass distribution of carbon fiber bundles with respect to a mass per unit length of individual carbon fiber bundles is preferably 50% or less or more preferably 30% or less of the mass of the carbon fiber bundle with the largest mass. This is realized when most of small pieces that are specific sections in the lengthwise direction and are generated by cutting the continuous carbon fiber bundle are present in the SMC when divided into two or more parts. When the mode value is 50% or less of the mass of the carbon fiber bundle with the largest mass, since a proportion of thin carbon fiber bundles included in a carbon fiber bundle aggregate increases, an SMC having excellent isotropy and homogeneity is obtained. When this SMC is molded, a composite material having excellent isotropy, homogeneity, and strength is obtained.

In addition, the SMC of the present invention includes carbon fiber bundles having a half-value width in a mass distribution of carbon fiber bundles with respect to the mass per unit length of individual carbon fiber bundles that is preferably 0.03 g/25.4 mm (g/inch) or more, and more preferably 0.05 g/25.4 mm (g/inch) or more. When the half-value width in a mass distribution of carbon fiber bundles with respect to the mass per unit length of individual carbon fiber bundles is 0.03 g/25.4 mm (g/inch) or more, since carbon fiber bundles with various thicknesses are included in the SMC, an SMC having excellent isotropy and homogeneity is obtained. When this SMC is molded, a composite material having excellent isotropy, homogeneity, and strength is obtained.

In addition, individual carbon fiber bundles in the SMC of the present invention are characterized by the fact that the number of carbon fiber single yarns included in the carbon fiber bundle is high. In such carbon fiber bundles, a continuous carbon fiber bundle may be divided into carbon fiber bundles with different thicknesses and then cut to about 25 mm, or may be cut to about 25 mm and the carbon fiber bundles may be then divided. A continuous carbon fiber

bundle which is cut to about 25 mm and is naturally divided into carbon fiber bundles with different thicknesses, which is the continuous carbon fiber bundle of the present invention, is preferably used. For example, such a continuous carbon fiber bundle can be obtained using a highly dispersible sizing agent to be described below as a sizing agent.

In addition, in the SMC of the present invention, when diffracted X-rays with a diffraction angle 2θ of 25.4° are detected according to an X-ray diffraction method, a roughness degree β obtained by the following Formulae (1) to (3) is 4.5 or less, and a standard deviation of the roughness degree β is 1.5 or less.

[Math. 3]

$$\text{Roughness degree } \beta = \int_0^{360} |f(\phi)|\, d\phi \times \frac{1}{360} = \left(\sum_{i=2}^{N}(|f(\phi_i)| + |f(\phi_{i-1})|) \times d\phi \times \frac{1}{2}\right) \times \frac{1}{360} \quad \cdots (1)$$

Here, in the above formula, f(($\varphi_i$) denotes a luminance obtained by subtracting an average luminance from a luminance (I($\varphi_i$)) at i-th rotation angle ($\varphi_i$) in X-ray diffraction measurement, which is represented by the following Formula (2), and d$\varphi$ denotes a step width of X-ray diffraction measurement. I($\varphi_i$) is normalized such that an integrated intensity becomes 10,000, which is represented by the following Formula (3).

[Math. 4]

$$f(\phi_i) = I(\phi_i) - \frac{\sum_{i=1}^{N} I(\phi_i)}{N} \quad \cdots (2)$$

$$\int_0^{360} I(\phi)\, d\phi = \sum_{i=2}^{N}\left(I(\phi_i) + I(\phi_{i-1})\right) \times d\phi \times \frac{1}{2} = 10000 \quad \cdots (3)$$

The roughness degree β is a value obtained from a profile derived from a fiber orientation in X-ray diffraction measurement of a fiber-reinforced resin material, and is measured by the following method.

As shown in Fig. 2, for example, a 15 mm×15 mm test piece is cut out at various positions on an SMC. While X-rays are emitted to the test piece using a transmission method using an X-ray device, the test piece is rotated about a thickness direction thereof, diffracted X-rays are captured using a detector arranged at an diffraction angle 2θ = 25.4°, and a luminance (I($\varphi_i$)) at the i-th rotation angle(($\varphi_i$) is measured. However, I($\varphi_i$) is normalized such that an integrated intensity becomes 10,000, which is represented by Formula (3).

Next, as shown in Formula (2), a luminance f($\varphi_i$) obtained by subtracting an average luminance from the luminance (I($\varphi_i$)) is defined. Roughness degrees β of respective test pieces (specimens) are obtained from Formula (1) derived using the luminance f($\varphi_i$). An average value of the roughness degrees β of the test pieces (specimens) is set as a roughness degree β of the SMC, and a standard deviation of the roughness degrees β of the SMC is calculated as a standard deviation of a population.

When the roughness degree β is zero, this indicates that the same amount of carbon fibers are included inside a sheet surface of the SMC in all directions. When the roughness degree β approaches zero, the isotropy of the SMC is higher. When the roughness degree β is 4.5 or less, there is no handling problem regarding isotropy in a general mechanical design. When carbon fibers with an elastic modulus of 200 to 400 GPa, which are generally used, are used, if all carbon fibers (100%) are oriented in the same direction, the roughness degree β is about 18. When 50% of carbon fibers are oriented in each of a 0° direction and a 90° direction, the roughness degree β is about 16. When 25% of carbon fibers are oriented in each of a 0° direction, a 45° direction, a 90° direction and a 135° (= -45°) direction, the roughness degree β is about 1.8. When the standard deviation of the roughness degree β approaches zero, there is less isotropic irregularity (structural irregularity) due to a part on the sheet surface of the SMC. When the roughness degree β (average value of roughness degrees β) of the SMC is 4.5 or less and the standard deviation of the roughness degree β is 1.5 or less, since the occurrence of a part with large anisotropy in the composite material obtained by molding the SMC is prevented, this is preferable.

As the matrix resin composition used in the SMC of the present invention, a thermoplastic resin, a thermosetting resin, and the like can be used. Examples of the thermosetting resin include an epoxy resin, a vinyl ester resin, an unsaturated polyester resin, a polyimide resin, a maleimide resin, and a phenolic resin. An epoxy resin and a vinyl ester resin are desirable in consideration of adhesion to carbon fibers. More preferably, an elastomer component is contained in addition to an epoxy resin component and a curing agent component for an epoxy resin composition. Examples of the elastomer component include carboxyl-terminated butadiene-nitrile (CTBN).

The thermoplastic resin is not particularly limited. A polyolefin such as polyethylene and polypropylene, a polyester such as polyethylene terephthalate, and polybutylene terephthalate, a polyamide such as polystyrene, an ABS resin, an acrylic resin, vinyl chloride, and polyamide 6, polycarbonate, polyphenylene ether, polyethersulfone, polysulfone, a polyether imide, a polyketone, a polyether ketone, a polyether ether ketone, and the like can be used. In addition, modified substances of these resins may be used, and resins of a plurality of types may be used in a mixture. In addition, the thermoplastic resin may contain various additives, a filler, a coloring agent, and the like.

The fiber-reinforced composite material of the present invention can be obtained using the SMC and using a press molding method that is generally used. That is, a molded product of the SMC is produced by a general press molding method in which a mold that has a desired molded product shape and that can be separated vertically is prepared, a predetermined amount of the above-described SMC is placed on the mold or one sheet thereof is put into the mold, heating and pressurization are performed, the mold is then opened and a desired molded article is extracted or the like. Here, a molding temperature and a molding pressure can be selected according to the shape of a desired molded product and the like.

As embodiments of the present invention, a continuous carbon fiber bundle, a carbon fiber bundle, an SMC, and a method of molding and evaluating a fiber-reinforced composite material will be described below.

(Highly dispersible sizing agent)

A highly dispersible sizing agent that can be suitably used for a continuous carbon fiber bundle of the present invention and a carbon fiber bundle used for an SMC of the present invention includes compounds (A) to (D) to be described below. The sizing agent can be obtained by appropriately mixing these components.

<Compound (A)>

The compound (A) included in the highly dispersible sizing agent is a compound having at least one epoxy group in a molecule. The compound (A) refers to an ester compound obtained by reacting an epoxy compound having a plurality of epoxy groups in a molecule with an unsaturated monobasic acid. Here, in the present invention, the epoxy group refers to a group having a three-membered ring having a ring structure including 2 carbon atoms and 1 oxygen atom in its structure. Specifically, a functional group represented by the following General Formula (e1), a functional group (glycidyl group) represented by the following General Formula (e2), and other cyclic aliphatic epoxy groups may be exemplified. As the other cyclic aliphatic epoxy groups, groups having a cyclic structure formed of a three-membered ring or a monocyclic or polycyclic aliphatic ring in its structure may be exemplified. For example, functional groups represented by the following General Formulae (e3) to (e5) can be exemplified.

[Chem. 1]

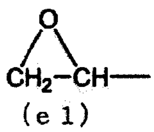
(e 1)

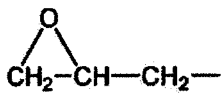
(e 2)

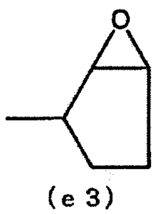
(e 3)

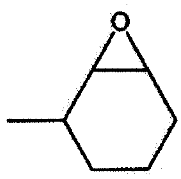
(e 4)

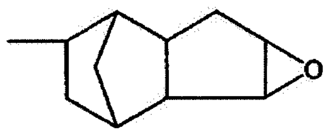
(e 5)

<Epoxy compound having a plurality of epoxy groups in a molecule>

In the compound (A), the epoxy compound having a plurality of epoxy groups in a molecule is not particularly limited. For example, a bisphenolic epoxy compound, a bisphenolic alkylene oxide-added epoxy compound, a hydrogenated bisphenolic epoxy compound, and a hydrogenated bisphenolic alkylene oxide-added epoxy compound may be exemplified. Such bisphenols are not particularly limited. A bisphenol F type, bisphenol A type, and bisphenol S type compound may be exemplified. In addition to the bisphenolic epoxy compound, epoxy resins of a phenol novolac type, a cresol novolac type, a diphenyl type, a dicyclopentadiene type, and a naphthalene structure type can be used. In addition, those having a linear aliphatic structure may be used.

<Unsaturated monobasic acid>

In the compound (A), the unsaturated monobasic acid is not particularly limited as long as it is a compound having one unsaturated group and one carboxyl group. The unsaturated group is not particularly limited, but a vinyl group or a propenyl group is preferable, and a vinyl group is more preferable because it is not bulky and does not reduce the rigidity of a main chain of a formed ester. An acrylic acid or methacrylic acid is particularly preferable. That is, the compound (A) is preferably an ester of an epoxy compound and acrylic acid or methacrylic acid.

The compound (A) is an ester compound obtained by reacting a compound having a plurality of epoxy groups with an unsaturated monobasic acid. In this reaction, a so-called half ester having an unsaturated group in which, among epoxy groups of the compound having a plurality of epoxy groups, at least one epoxy group remains unreacted and at least one epoxy group is ring-opened due to the unsaturated monobasic acid is formed. The compound (A) may include epoxy groups derived from the compound having a plurality of epoxy groups and an unsaturated group (for example, $CH_2$=CH-COO- derived from acrylic acid) derived from the unsaturated monobasic acid in a molecule, thereby exhibiting a coupling function between a surface of a carbon fiber and a resin molecule, and greatly improving interfacial adhesion between the carbon fibers and the resin. In particular, it is possible to strongly bond a radical polymerization resin such as an unsaturated polyester resin, a vinyl ester resin, and an acrylic resin to the carbon fibers, and it is then possible to exhibit excellent interfacial adhesion.

In particular, an ester compound of a compound having epoxy groups at both ends of a molecule and an unsaturated monobasic acid, which is a compound having an unsaturated group at one end of a main chain of a molecule and an epoxy group at the other end, is preferable, because excellent interfacial adhesion is then exhibited. When the compound (A) is used, it is possible to strongly bond a radical polymerization resin to the carbon fibers, and it is possible for excellent interfacial adhesion to be exhibited.

As the compound having epoxy groups at both ends of a molecule, in particular, either or both of a bisphenolic diepoxy compound and a bisphenolic alkylene oxide-added diepoxy compound are preferably used. That is, the compound (A) is preferably an ester of either or both of a bisphenolic diepoxy compound and a bisphenolic alkylene oxide-added diepoxy compound and an unsaturated monobasic acid, which is a compound having an unsaturated group at one end of a main chain of a molecule and an epoxy group at the other end. In the present invention, as the compound (A), one type of ester compound may be used alone or two or more types of ester compound may be used in combination.

<Compound (B)>

The highly dispersible sizing agent includes a bifunctional type urethane acrylate oligomer (B) (hereinafter referred to as a "compound (B)").

The compound (B) has an effect of improving interfacial adhesion between a matrix resin and carbon fibers by forming an interface phase having excellent flexibility at an interface between the matrix resin and the carbon fibers. In addition, as a matrix resin for a fiber-reinforced composite material, there are many radical polymerization resins with low toughness such as a vinyl ester resin and an unsaturated polyester resin. Interfacial adhesion is significantly improved by high toughness due to softening of an interface phase.

In addition, when the carbon fibers to which the sizing agent is adhered and the matrix resin are composited, a sizing agent component on the surface of the carbon fibers diffuses into the matrix resin, and in particular, a region containing the sizing agent component at a high concentration is formed in the matrix resin near the interface. This region influences the mechanical properties of the composite material. Further, since the compound (B) is a urethane acrylate oligomer, when the fiber-reinforced composite material is formed, the component is incorporated into a curing reaction of the matrix resin, and thus the interface phase and the matrix resin phase are integrated. Therefore, when the compound (B) is included, even if a radical polymerization resin is used as a matrix resin, the mechanical properties of the fiber-reinforced composite material can have the same levels as when an epoxy resin is used as a matrix resin.

The compound (B) causes a tensile elongation in a cured product obtained by the following measurement method to be preferably 40% or more. The tensile elongation is more preferably 45% or more and most preferably 50%

or more because an effect of improving toughness of the interface phase is then excellent. An upper limit of the tensile elongation (%) is preferably 900% or less and more preferably 700% or less in consideration of there being a significant reduction in elastic modulus of the resin near the interface.

In addition, the compound (B) needs to be bifunctional. When the compound (B) is a trifunctional or higher type, a crosslink density becomes too high, and sufficiently high toughness is not exhibited. On the other hand, when the compound (B) is a monofunctional type, a crosslinking reaction with the matrix resin occurs on only one side, and it is not possible to obtain a sufficient effect of improving toughness.

In addition, a compound (B) having a viscosity at 60 °C of 5,000 mPa·s or more, and imparting a tensile strength in a cured product thereof of 6 MPa or more is preferable because an effect of improving toughness of the interface phase is strong. A higher viscosity indicates a larger molecular weight of an oligomer thereof or stronger cohesion between oligomer molecules. When the molecular weight is larger or cohesion between molecules is strong, the compound (B) does not diffuse into the matrix resin but is unevenly distributed in the interface phase between the surface of the carbon fibers and the matrix resin, and as a result, effective softening of the interface phase can be achieved, which is preferable. Here, the tensile strength and the tensile elongation of the cured product can be obtained by the following measurement method.

<Method of measuring tensile strength and tensile elongation of cured product >

1) A mixture of a urethane acrylate oligomer (B) (97 g) and a curing agent (2-hydroxy-2-methyl-1-phenyl-propan-1-one) (3 g) is applied to a glass plate to obtain a film with a thickness of 100 μm. This film is cured by emitting ultraviolet rays for 5 seconds from a position 10 cm away from the film using an ozone type lamp (80 W/cm).
2) Using the cured film, according to JIS K 7127 (test piece type 5), a tensile strength and a tensile elongation are measured at a tensile speed of 300 mm/min.

A viscosity of the compound (B) at 60 °C is preferably 10,000 mPa·s or more and more preferably 20,000 mPa·s or more. An upper limit of the viscosity at which it is not a solid at 60 °C is excellent in consideration of preparation of the sizing agent and stability of the sizing agent over time. Here, the viscosity of the compound (B) can be measured by a B type viscometer.

A glass transition temperature (Tg) of the cured product of the compound (B) is preferably -5 °C or higher and more preferably 5 °C or higher. When the Tg of the cured product is -5 °C or higher, not only can appropriate softening be achieved in the interface phase but also a value of stress causing breakage is higher. Therefore, a stronger interface phase can be formed and the above effects are improved. That is, the interface phase has a function of supporting reinforcing fibers, and when softening is appropriately reduced, favorable mechanical properties of the composite material are easily maintained. An upper limit of the Tg of the cured product is preferably 100 °C or less and more preferably 80 °C or less in consideration of the function as a flexible component.

The Tg of the cured product of the urethane acrylate oligomer is obtained as follows. A cured film obtained in the same method as in measurement of the tensile elongation is used as a test piece, a viscoelasticity measuring device (product name: Rheogel E4000 commercially available from UBM) is used, heating is performed at a rate of 2 °C/min, a dynamic viscoelasticity and a loss tangent of the test piece are measured, and the Tg can be obtained from a peak temperature (tan δMAX) of the loss tangent.

The "urethane acrylate oligomer" is a compound having a urethane bond and an acryloyl group ($CH_2$=CH-CO-) in a molecule. The structures of a urethane acrylate oligomer can be broadly classified into an aromatic type having an aromatic group in a structure and an aliphatic type having no aromatic group. The structure of the urethane acrylate oligomer used as the compound (B) is not particularly limited, and the aromatic type or the aliphatic type may be used. The aliphatic type is preferable because it has a favorable balance between the tensile elongation and the tensile strength of the cured product.

As the compound (B) included in the highly dispersible sizing agent, a commercially available urethane acrylate oligomer may be used. Examples of such a urethane acrylate oligomer include CN-965, CN-981, CN-9178, CN-9788, CN-9893, CN-971, CN-973, and CN-9782 (commercially available from Sartomer), UF-8001 (commercially available from Kyoeisha Chemical Co., Ltd.), and UA-122P (commercially available from Shin-Nakamura Chemical Co., Ltd.) (all are product names). One type of the compound (B) may be used alone or two or more types thereof may be used in combination.

<Contents of compound (A) and compound (B)>

In the highly dispersible sizing agent, a content ratio (mass ratio) between the compound (A) and the compound

(B) needs to be within a range of compound (B)/ compound (A)=1/3 to 2/1. When the content of the compound (B) is less than 1/3 of the content of the compound (A), softening and ·high toughness of the interface phase become insufficient. On the other hand, when the content of the compound (B) exceeds 2/1 of the content of the compound (A), a favorable adhesion exhibiting effect as a function of the compound (A) is inhibited and a sufficient effect of improving adhesion between the carbon fibers and the matrix resin may not be obtained. The content ratio between the compound (A) and the compound (B) is preferably compound (B)/ compound (A)=1/2 to 3/2, and more preferably 2/3 to 1/1.

In addition, in the highly dispersible sizing agent, a proportion of the total amount of the compound (A) and the compound (B) in the entire sizing components needs to 20 mass% or more. When the proportion of the total amount is less than 20 mass%, functions of these two components are not sufficiently exhibited, and the effects of the present invention may not be obtained.

Here, "entire sizing components" indicates a total amount of all components imparted to carbon fibers after a sizing treatment among components included in the sizing agent, and indicates active components except for components that are removed after sizing, for example, water and an organic solvent. That is, "the entire sizing components" can be obtained as a total amount of the compound (A) and the compound (B) described above, and a stearic acid ester compound (C) and a surfactant (D) to be described below, an ester compound (E) to be described below as an optional component, and other components. A proportion of the total amount of the compound (A) and the compound (B) in the entire sizing components is preferably 25 mass% or more and more preferably 30 mass% or more.

<Compound (C)>

The highly dispersible sizing agent includes a stearic acid ester compound (C) (hereinafter referred to as a "compound (C)") as an essential component. The compound (C) is a stearic acid ester compound, and can improve smoothness of the carbon fiber bundle.

As the stearic acid ester compound, an ester of stearic acid and various alcohols can be used. Methyl stearate, ethyl stearate, propyl stearate, butyl stearate, octyl stearate, stearyl stearate, oleyl stearate, tridecyl stearate, hexadecyl stearate, ethylhexyl stearate, and the like are preferably used.

In the highly dispersible sizing agent, a proportion of the compound (C) in the entire sizing components is preferably 5 mass% or more and 30 mass% or less. When the proportion is 5 mass% or more, it is possible to impart favorable smoothness to the carbon fiber bundle. When the proportion is 30 mass% or less, even when applied to a large tow, bundling does not excessively decrease, favorable handling properties are easily obtained, and adhesion with the matrix resin is not impaired so that favorable mechanical strength can be obtained. A proportion of the compound (C) in the entire sizing components is preferably 7 mass% or more and 25 mass% or less, and more preferably 10 mass% or more and 20 mass% or less.

<Compound (D)>

Preferably, the highly dispersible sizing agent further includes a surfactant (D) (hereinafter referred to as a "compound (D)"). The compound (D) is used for dispersing the compound (A), the compound (B), and the compound (C) described above, a compound (E) as an optional component to be described below, and other components in water. One type of the compound (D) may be used alone or two or more types thereof may be used in combination.

Examples of the compound (D) included in the highly dispersible sizing agent include a nonionic surfactant and an anionic surfactant. As the nonionic surfactant, for example, a surfactant such as an aliphatic nonion and a phenolic nonion can be used. Examples of the aliphatic nonionic surfactant include a higher alcohol ethylene oxide adduct, a fatty acid ethylene oxide adduct, a polyvalent alcohol fatty acid ester ethylene oxide adduct, a glycerol fatty acid ester, a sorbitol and sorbitan fatty acid ester, and a pentaerythritol fatty acid ester. Examples of the phenolic nonionic surfactant include an alkyl phenolic nonion, and a polycyclic phenolic nonion.

In addition, as the ethylene oxide adduct, a type in which a propylene oxide unit is included at random or in the form of a block in a part of a polyethylene oxide chain is suitable. As the fatty acid ethylene oxide adduct or polyvalent alcohol fatty acid ester ethylene oxide adduct, monoester type, diester type, triester type, or tetraester type nonionic surfactants can be used.

As the compound (D) included in the highly dispersible sizing agent, an anionic surfactant (hereinafter appropriately referred to as a "(D-1) component") having an ammonium ion as a counter ion and a nonionic surfactant (hereinafter appropriately referred to as a "(D-2) component") to be described below are preferably included.

The (D-1) component which is an anionic surfactant having an ammonium ion as a counter ion has a hydrophobic group and an ammonium ion as a counter ion, and thus improves stability when the sizing agent for carbon fibers of the present invention is in an aqueous dispersion solution, and the wettability of the surface of the carbon fibers with respect to the resin. In addition, the (D-2) component has an effect of lowering reaction activity between the ammonium ion of the (D-1) component and the epoxy group of the compound (A). Therefore, when the (D-1) component and the (D-2)

component are included in appropriate amounts (contents will be described below in detail), impregnating properties of various matrix resins are further improved, and also a change in hardness of the carbon fiber bundle treated with the sizing agent over time can be made very small.

The (D-1) component is not particularly limited, and a carboxylate, a sulfate ester salt, a sulfonate, and a phosphate ester salt may be exemplified. Among these, a sulfate ester salt and sulfonate are more preferable because they have a particularly excellent ability to emulsify the compound (A) and the compound (B).

Examples of the sulfate ester salt include a higher alcohol sulfate ester salt, a higher alkyl polyethylene glycol ether sulfate ester salt, an alkylbenzene polyethylene glycol ether sulfate ester salt, a polycyclic phenyl ether polyethylene glycol ether sulfate ester salt, and a sulfated fatty acid ester salt. In addition, a sulfate ester salt in which a propylene oxide unit is included at random or in the form of a block in a part of a polyethylene oxide chain in a higher alkyl polyethylene glycol ether sulfate ester salt, a alkylbenzene polyethylene glycol ether sulfate ester salt, and a polycyclic phenyl ether polyethylene glycol ether sulfate ester salt can be used.

Examples of the sulfonate include an alkylbenzene sulfonate, an alkyl naphthalene sulfonate, a polycyclic phenyl ether sulfonate, an alkyl sulfonate, an α-olefin sulfonate, an α-sulfonated fatty acid salt, and a dialkyl sulfosuccinate.

In particular, an anionic surfactant having a hydrophobic group represented by the following General Formula (1) or (2) is more preferably used as the (D-1) component.

[Chem. 2]

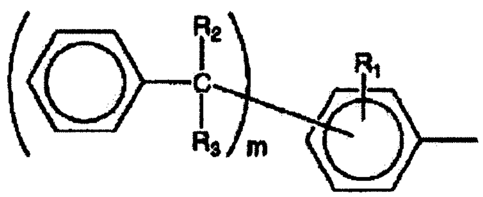

• • • (1)

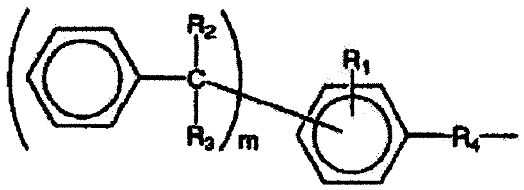

• • • (2)

In the carbon fiber-reinforced composite material, since it is desirable for excellent mechanical properties to be exhibited by compositing the carbon fibers and the matrix resin, those having an aromatic structure are mainly used in the matrix resin in consideration of the rigidity, and in the sizing agent for a carbon fiber, a compound having an aromatic structure is used as a main component in many cases. Since the hydrophobic group represented by General Formula (1) or (2) has high affinity with an aromatic substance, when an anionic surfactant having a hydrophobic group represented by General Formula (1) or (2) as the (D-1) component is included in the sizing agent for a carbon fiber, an emulsified state is stable, and favorable results in storability and the production and process when carbon fibers are produced are provided. In addition, compatibility between the sizing agent and the matrix resin is improved, and the effects of the present invention, and particularly, an effect of improving mechanical properties are further improved.

In addition, the anionic surfactant having the hydrophobic group represented by General Formula (1) or (2) is preferable because it is desired to avoid the use of an anionic surfactant having a phenol group including a relatively long alkyl group such as a nonylphenol type or an octylphenol type in order to prevent diffusion of exogenous endocrine disruptor derivatives.

In General Formulae (1) and (2), $R_1$ is a hydrogen atom or a monovalent chain hydrocarbon group having 1 to 3 carbon atoms, and is preferably a hydrogen atom or an alkyl group having 1 to 3 carbon atoms, more preferably a hydrogen atom or a methyl group, and most preferably a hydrogen atom in consideration of exogenous endocrine disruptor derivatives. $R_2$ and $R_3$ are a hydrogen atom or a monovalent chain hydrocarbon group having 1 to 3 carbon atoms, and may be the same or different from each other. As the chain hydrocarbon group of $R_2$ and $R_3$, the same chain hydrocarbon groups as in $R_1$ may be exemplified. $R_4$ is a divalent aliphatic hydrocarbon group, and is, for example, a linear or branched alkylene group having 1 to 10 carbon atoms. m is a positive integer, and is preferably an integer of 1 to 3, and more preferably an integer of 1 or 2. When m is 3 or less, it is possible to easily prevent the hydrophobic group itself from having a bulky structure, and it is possible to easily improve affinity and compatibility between the compound (A), the compound (B) and the matrix resin. As a result, it is easy to improve stability of emulsification, resin

impregnation properties, and additionally, mechanical properties of the fiber-reinforced composite material. A group in the parentheses with a subscript m is preferably a benzyl group (group in which both $R_2$ and $R_3$ are hydrogen atoms) or a styrene group (group in which one of $R_2$ and $R_3$ is a hydrogen atom, and the other is a methyl group) in consideration of bulkiness of a molecule of a hydrophobic base. In addition, when m is 2 or more, that is, when there are a plurality of groups in the parentheses with a subscript m, such groups may be the same or different from each other.

In addition, a commercially available surfactant can be used as the compound (D).

Examples of the nonionic surfactant include "Newcol 707," "Newcol 723," and "Newcol 707-F" (commercially available from Nippon Nyukazai Co., Ltd.).

Examples of the anionic surfactant ((D-1) component) include Newcol 707-SF" and "Newcol 723-SF" (commercially available from Nippon Nyukazai Co., Ltd.) and "High Tenor NF-13" and "High Tenor NF-17" (commercially available from DKS Co. Ltd.) (all are product names).

The nonionic surfactant ((D-2) component) is a compound that is not particularly limited. However, an aliphatic nonionic surfactant is preferable because it has a highly excellent effect of lowering reaction activity. Examples of the aliphatic nonionic surfactant include a higher alcohol ethylene oxide adduct, a fatty acid ethylene oxide adduct, a polyvalent alcohol fatty acid ester ethylene oxide adduct, a glycerol fatty acid ester, a sorbitol and sorbitan fatty acid ester, and a pentaerythritol fatty acid ester. As the ethylene oxide adduct, a type in which a propylene oxide unit is included at random or in the form of a block in a part of a polyethylene oxide chain is suitably used.

As the higher alcohol ethylene oxide adduct, the fatty acid ethylene oxide adduct, and the polyvalent alcohol fatty acid ester ethylene oxide adduct, a type in which a propylene oxide unit is included at random or in the form of a block in a part of the polyethylene oxide chain is more preferable. This is because they have an excellent ability to lower reaction activity of the ammonium ion with respect to the epoxy group. As the fatty acid ethylene oxide adduct, and the polyvalent alcohol fatty acid ester ethylene oxide adduct, a monoester type, a diester type, a triester type, and a tetraester type can be used.

In addition, a commercially available product can be used as the (D-2) component. For example, "Fine Surf FON180E06 (product name, commercially available from Aoki Oil Industrial Co., Ltd.)" can be used.

The content of the compound (D) can be appropriately determined in consideration of the stability of an aqueous dispersion solution in which the sizing agent is dispersed in water and a sizing effect of the sizing agent. However, in the sizing agent (100 mass%) as a guide, the content is preferably 5 mass% or more and 30 mass% or less, and more preferably 10 mass% or more and 25 mass% or less. When the content of the surfactant is 5 mass% or more, it is easy to improve the stability of the aqueous dispersion solution in which the sizing agent is dispersed in water. When the content is 30 mass% or less, an effect of the sizing agent is easily exhibited.

<Content of (D-1) component and (D-2) component>

When the highly dispersible sizing agent includes the (D-1) component and the (D-2) component, a content ratio (mass ratio) between the (D-1) component and the (D-2) component is preferably within a range of (D-2) component/(D-1) component=1/10 to 1/5.

When the mass ratio is within such a range, the reaction activity of the ammonium ion derived from the compound (D) with respect to the epoxy group of the compound (A) is easily lowered. As a result, it is possible to prevent the hardness of the carbon fiber to which the sizing agent is adhered from changing sharply. In addition, the stability of emulsification when the sizing agent is emulsified using water or the like as a medium, and the wettability of the surface of the carbon fibers subjected to the sizing treatment with respect to the resin are improved, which is preferable.

In addition, in the highly dispersible sizing agent, when the (D-1) component and the (D-2) component are included, a proportion of the total amount of the (D-1) component and the (D-2) component in the entire sizing components is preferably 10 mass% or more and 25 mass% or less. Within the range, the stability of emulsification of a sizing agent solution is very favorable and an effect of the sizing agent is easily exhibited. A more preferable lower limit value of the total amount of the (D-1) component and the (D-2) component is 13 mass%, and a more preferable upper limit value is 20 mass%.

<Compound (E)>

In addition to the compounds (A) to (D) described above, the highly dispersible sizing agent may further include an ester compound (E) (hereinafter appropriately referred to as a "compound (E)") having an acid value of 50 or more which is an ester compound of a bisphenolic alkylene oxide adduct and a dicarboxylic acid compound.

The compound (E) has a molecular weight of about 1,000 and preferably contains a compound having a carboxyl group at one end of a molecule as a main constituent component. Since the compound (E) exhibits excellent compatibility with a matrix resin, and particularly, an epoxy resin and a vinyl ester resin, the wettability of the carbon fibers subjected to the sizing treatment with respect to the resin is improved and resin impregnation properties are further improved.

The "bisphenolic alkylene oxide adduct" is preferably a compound obtained by adding an ethylene oxide or propylene oxide (2 to 4 mol) to bisphenols (1 mol). When an amount of ethylene oxide or propylene oxide added to bisphenols (1 mol) is 4 mol or less, it is easy to improve affinity with the matrix resin without impairing the rigidity of a molecular chain that bisphenols inherently have. More preferably, a compound is obtained by adding an ethylene oxide or propylene oxide (2 mol) to bisphenols. One type of bisphenolic alkylene oxide adduct may be used alone or a mixture of a plurality of compounds may be used.

The "dicarboxylic acid compound" is preferably an aliphatic compound having 4 to 6 carbon atoms. When an aromatic compound is used as the dicarboxylic acid compound, a melting point of the obtained ester compound is relatively high, and solubility with the matrix resin tends to relatively deteriorate. When an aliphatic compound is used as the dicarboxylic acid compound, the wettability of the matrix resin with respect to the carbon fiber is improved, which is preferable. In addition, when an aliphatic compound having 6 carbon atoms or less is used as the dicarboxylic acid compound, it is easy to improve affinity with the matrix resin without impairing the rigidity of the obtained ester compound.

Examples of the dicarboxylic acid compound include fumaric acid, maleic acid, methyl fumaric acid, methyl maleic acid, ethyl fumaric acid, ethylmaleic acid, glutaconic acid, itaconic acid, malonic acid, succinic acid, methylsuccinic acid, glutaric acid, and adipic acid.

One type of the compound (E) that can be added to the highly dispersible sizing agent may be used alone or two or more types thereof may be used in combination. In the highly dispersible sizing agent, a ratio of the mass of the compound (E) with respect to the total mass of the compound (A) and the compound (B) (compound (E)/[compound (A)+ compound (B)]) is preferably 2.0 or less. When the ratio is 2.0 or less, it is possible to easily prevent an interaction between the compound (A) and the surface of the carbon fibers from being reduced due to an interaction between the epoxy group of the compound (A) and an acidic group (such as a carboxy group) of the compound (E). As a result, a coupling function of the sizing agent according to the compound (A) is easily exhibited and adhesion between the carbon fibers and the matrix resin is improved. The ratio is preferably 1.75 or less and more preferably 1.55 or less. A lower limit value of this ratio is not particularly limited. However, in order to exhibit the effect of the compound (E) that improves the wettability of the carbon fibers subjected to the sizing treatment with respect to the resin and resin impregnation properties, 0.2 or more is more preferable and 0.4 or more is most preferable.

<Aqueous dispersion solution of sizing agent for carbon fibers>

The aqueous dispersion solution of the sizing agent for carbon fibers can be obtained by mixing and stirring (emulsification, aqueous dispersion) respective components by a general method. A concentration of the sizing agent (a concentration of a nonvolatile component) in the aqueous dispersion solution, that is, a concentration of components other than volatile components (such as water that is dried and removed after sizing) in the aqueous dispersion solution for sizing, is not particularly limited as long as it is in a concentration range in which water is in a continuous phase, and a concentration of 10 mass% or more and 50 mass% or less is generally used. There is no problem even if the concentration of the sizing agent is less than 10 mass% when the aqueous dispersion solution for sizing is prepared. However, when a proportion of water in the aqueous dispersion solution for sizing is higher, this is uneconomical in consideration of transportation and storage between preparation and use (sizing treatment of the carbon fibers) of the aqueous dispersion solution for sizing. Therefore, when the carbon fibers are subjected to the sizing treatment, a method in which the aqueous dispersion solution for sizing is diluted to about 0.1 mass% or more and 10 mass% or less such that an amount of the sizing agent that is adhered to the carbon fibers becomes a desired value and thus is adhered to the carbon fibers is general.

<Carbon fiber bundle to which sizing agent for carbon fiber is adhered>

A carbon fiber bundle that can be suitably used for the continuous carbon fiber bundle of the present invention and the carbon fiber bundle (carbon fibers subjected to the sizing treatment) to which the sizing agent for carbon fibers used for the SMC of the present invention is adhered may be made of any raw material such as pitch, rayon or polyacrylonitrile, and any of a high strength type (low elastic modulus carbon fiber), medium and high elastic carbon fibers or ultra high elastic carbon fibers may be used. As a method of adhering the sizing agent for carbon fibers, for example, a sizing agent dispersion solution can be adhered to carbon fibers by a roller immersion method or a roller contact method, and dried. In consideration of productivity and uniform adhesion, the roller immersion method is preferable.

An amount of sizing agent adhered in the carbon fiber bundle to which the sizing agent for carbon fibers used for the SMC of the present invention is adhered is preferably 0.6 mass% or more and 2.0 mass% or less, and more preferably 1.0 mass% or more and 1.6 mass% or less with respect to the total mass of the carbon fibers and the sizing agent. When an amount of sizing agent adhered is 0.6 mass% or more, the entire surface of the carbon fibers is easily covered with the sizing agent. In addition, it is possible to impart smoothness and bundling to the carbon fiber bundle at the same time. Further, if the carbon fibers subjected to the sizing treatment and the matrix resin are mixed together

when the carbon fiber-reinforced composite material is produced, it is possible for functional expressions such as flexibility and toughness according to the above-described interfacial resin layer to be fully exhibited. On the other hand, when an amount of sizing agent adhered is 2.0 mass% or less, it is possible to easily prevent handling properties of the carbon fibers subjected to the sizing treatment and impregnating properties of the matrix resin from deteriorating as a result of a large amount of the sizing agent accumulated on the surface of the carbon fibers and hardening of the carbon fibers subjected to the sizing treatment.

In addition, when an amount of sizing agent adhered is within the above range, in the carbon fiber-reinforced composite material, it is possible to prevent mechanical properties from deteriorating due to a failure of transmission of stress to the carbon fibers subjected to the sizing treatment from the matrix resin through the interfacial resin layer. In addition, when an amount of sizing agent adhered is within the above range, bundling and scratch resistance of the carbon fibers become excellent, the wettability with respect to the matrix resin, and interfacial adhesion with the matrix resin are sufficiently improved, and the obtained carbon fiber-reinforced composite material has favorable dynamic properties.

Here, bundling of the carbon fiber bundle changes due to the number of filaments of the carbon fibers subjected to the sizing treatment, a fiber diameter, surface wrinkles, or the like. In the present invention, when proportions of the components in the sizing agent are adjusted and an amount of sizing agent adhered is adjusted, suitable bundling can be obtained. An amount of sizing agent adhered can be adjusted by adjusting a concentration of the sizing agent in the sizing agent aqueous dispersion solution in the sizing treatment or adjusting an aperture amount.

In the continuous carbon fiber bundle of the present invention and the carbon fiber bundle to which the sizing agent for carbon fibers used for the SMC of the present invention is adhered, according to application of the sizing agent, accumulation of the sizing agent on fluff or guides due to mechanical friction is unlikely to occur, and impregnating properties and adhesion of the resin are excellent.

In addition, in particular, when the sizing agent includes the compound (E), excellent compatibility with the matrix resin is exhibited. Therefore, the wettability of the carbon fibers subjected to the sizing treatment with respect to the resin is improved and resin impregnation properties are further improved.

[Examples]

(Evaluation of coefficient of dynamic friction of continuous carbon fiber bundle)

Using a device whose overview is shown in Fig. 4, a coefficient of dynamic friction of the continuous carbon fiber bundle with respect to a metal surface was measured.

A drive roller 1 in the drawing had a diameter of 30 mm and had a hard chrome-plated surface with an arithmetic average roughness (Ra) of 0.63 μm, a maximum height (Rmax) of 6.80 μ, a ten-point average roughness (Rz) of 5.45 μm, an average peak height (Rpm) of 2.11 μm, and a peak count (Pc) of 24.2 measured according to JIS B 0601. A continuous carbon fiber 8 was brought into contact with the drive roller 1 at an angle of 1.0 π (rad).

One end of a continuous carbon fiber bundle 8 was connected to a load measuring device 6, and a weight with a mass of 1 kg was hung at the other end. The drive roller 1 was rotated at a rotational speed of 0.48 m/min, an average value of loads measured for 30 seconds using the load measuring device 6 was used, and a coefficient of dynamic friction was calculated using the following formula.

$$\text{Coefficient of dynamic friction} = \mathrm{Ln}\,(T1/T0)/\theta$$

T1: load measured using load measuring device (kgf)
T0: mass of weight (=1 kg)
θ: contact angle between continuous carbon fiber bundle and rotating roller (=1.0 π)

(Method of measuring interlacing value per thickness of 1 mm of fiber bundle)

a) One end of a sample of a continuous carbon fiber bundle was attached to an upper grip of a hanging device having appropriate performance, and a weight was hung at a position 1 m below the grip part, and the sample was vertically hung. A load of the weight was a load (mN) obtained by multiplying the number of the displayed tex of the sample by 17.64 and was limited to 980 mN.

b) The thickness of the sample was measured at a position 1 cm away from the upper grip part using a film thickness

meter (Mitutoyo IDF125).

c) One end of a hook with a diameter of 0.5 mm to 1.0 mm and a smoothly finished surface was inserted such that a yarn bundle was divided into two parts at a point 1 cm below from the upper grip of the sample. At the other end of the hook, at a load (mN) obtained by multiplying a value obtained by dividing the number of the displayed tex of the sample by the number of filaments by 88.2, a load with a lower limit of 19.6 mN and an upper limit of 98 mN was attached, and the hook was lowered at a speed of about 2 cm/s.

d) A falling distance of the hook to a point at which the hook was stopped due to entanglement of a yarn was obtained.

A position at which the hook was inserted was obtained by changing a stop position of the hook downward and sequentially obtaining falling distances.

e) When the hook reached a hanging position of a weight 1 m below, a falling distance at this time was not measured, a continuous part of the continuous carbon fiber bundle was attached to the upper grip of the hanging device, a weight was hung at a position 1 m below the grip part and the sample was vertically hung, and in the same operations as in the above, c) a falling distance of the hook was measured 50 times in total, an average value was obtained, and the number of times of lowering necessary for lowering the hook 1 m was calculated and set as an interlacing value.

f) The degree of interlacing obtained in the above e) was divided by the thickness (mm) of the sample, and an interlacing value per thickness of 1 mm of the fiber bundle was calculated.

(Method of producing SMC)

A resin (100 parts by mass) of 70.0 parts by mass of a vinyl ester resin (product name: 8051AA commercially available from U-PICA Company. Ltd.) and 30.0 parts by mass of an unsaturated polyester resin (product name: AGU2000X commercially available from U-PICA Company. Ltd.), 0.5 parts by mass of a curing agent (product name: Perhexa C commercially available from NOF Corporation), 0.5 parts by mass of (product name: Kayacarbon BIC-75 commercially available from Kayaku Akzo Corporation), 0.5 parts by mass of an internal release agent (product name: MOLD WIZ INT-EQ-6 commercially available from Axel Plastics Research Labs,), 17.0 parts by mass of a modified diphenylmethane diisocyanate (product name: Cosmonate LL commercially available from Mitsui Bussan Chemicals Co., Ltd.) as a thickener, and 0.2 parts by mass of 1,4 benzoquinone (commercially available from Wako Pure Chemical Industries, Ltd.) as a stabilizer were mixed and stirred for about 5 minutes using a hand mixer to obtain a paste for an SMC.

The paste for an SMC was applied to a lower carrier film (polypropylene film, product name: Suntox CP, thickness: 40 μm commercially available from Suntox) with a thickness of 2.0 mm with a doctor blade using an SMC production device (commercially available from Tsukishima Kikai Co., Ltd.), and carbon fiber bundles were distributed at a ratio of 50 parts by mass of the carbon fiber bundles with respect to 50 parts by mass of the paste for an SMC. In the same manner as in the lower carrier film, a paste for an SMC was applied so that the paste was disposed on the lower side, the distributed carbon fiber bundle was interposed between the pastes, and the paste for an SMC was impregnated into the carbon fiber bundles. Then, an aging treatment was performed at room temperature and the SMC (2.5 kg/$m^2$) was produced. Here, the length of the carbon fiber bundles to be distributed was 25.4 mm, and a drop difference from a cut position of a roving cutter of the SMC production device to the paste for an SMC applied to the lower carrier film was adjusted to 1 m.

(Evaluation of mass distribution of carbon fiber bundles with respect to mass of carbon fiber bundles obtained by cutting continuous carbon fibers)

In the above method of producing the SMC, without using the paste for an SMC, a white paper plate was placed on a lower carrier film to which no paste for an SMC was applied as shown in Fig. 3, the carbon fiber bundles were distributed and aggregates of the carbon fiber bundles cut to 1 inch (25.4 mm) were collected.

The continuous carbon fiber bundle was wound around the bobbin at the end of the production process of the carbon fiber, and while the width of the continuous carbon fiber bundle wound around the bobbin was maintained, the bundle was supplied to the roving cutter without adding twist or interwinding. The roving cutter had a blade pitch of 1 inch (25.4 mm) and a blade thickness of 0.1 mm or more and 0.7 mm or less, and a rigid urethane resin was used for a surface of the roller against which the blade was pressed.

Here, when the carbon fiber bundle was shorter than this setting, since slipping occurred in the rotary cutter, preferably, the measurement conditions were adjusted, and cutting was performed in a non-slipping state.

The carbon fiber bundles collected for one evaluation were in a range of 15 to 20 g.

The aggregates of the carbon fiber bundles collected in this manner were divided into individual carbon fiber bundles, the masses of respective carbon fiber bundles were measured, and, for example, separated into sections of

0.01 g, and a mass distribution was obtained for the sections.

In measurement of the carbon fiber bundles, all individual carbon fiber bundles that were visually determined to have a width of 0.05 mm or more were measured. However, long carbon fiber bundles generated due to miscutting were excluded from subjects for mass measurement.

In a mass distribution diagram, the mass of the carbon fiber bundle having the largest mass distribution was set as a mode value. In addition, the half-value width in the mass distribution was read from the mass distribution diagram, and was used as an index of a spread of the mass distribution of the carbon fiber bundles. When the lengths of individual carbon fiber bundles were the same, the spread of the mass distribution of the carbon fiber bundles corresponded to the spread of the number of carbon fiber single yarns included in the carbon fiber bundles.

(Evaluation of roughness degree β of SMC)

From the SMC to be evaluated in a longitudinal direction of the SMC manufacturing process, a sample of 100 mm in length×100 mm in width was cut out and placed on a flat table, and was surrounded by a thick piece of a heat resistant material plate, the entire sample was covered with a film such as a nylon film, and left at 140 °C for 60 minutes while the pressure between the film and the flat table was reduced using a vacuum pump, and a matrix resin composition was cured. Since the SMC was cured without deformation, the orientation of the carbon fibers was the same as the orientation of the carbon fibers in the SMC before curing. From the SMC cured in this manner, as shown in Fig. 2, nine test pieces were extracted and subjected to X-ray diffraction measurement.

As the X-ray diffraction device, an Empyrean (commercially available from PANalytical) was used. A tube voltage was set to 45 kV and a tube current was set to 40 mA. In addition, a double cross slit was attached to the incident side, and all vertical and horizontal widths of upstream and downstream slits were set to 2 mm. In addition, a parallel plate collimator was attached to the light receiving side and a proportional counter was attached to a detector. Measurement data was obtained at intervals of 0.04 degrees and the crystal orientation of the test pieces was evaluated.

Here, the above measurement conditions are only examples, and the evaluation can be performed by appropriately changing the conditions as long as the purpose of measurement of the roughness degree β is not changed.

The roughness degrees β of the nine test pieces (specimens) were measured. An average value was set as a roughness degree β of the SMC. A standard deviation of the roughness degree β of the population estimated from the specimens was set as a standard deviation of the roughness degree β of the SMC.

(Molding of fiber-reinforced composite material)

300 g of SMC cut out into squares was placed at the center of a cavity (300 mm×300mm×2mm, surface with chrome-plated finish) of a press forming mold for panel molding having a fitting part at an end, the mold was closed and heating and pressurizing (140 °C, 8 MPa×5 minutes) were performed, and an SMC molded product having the same shape as the inner mold shape was obtained.

(Evaluation of fiber-reinforced composite material)

From the SMC molded product with a thickness of 2 mm obtained by press molding, a test piece with a width of 15 mm and a length of 100 mm was cut out, and a 3-point bending test was performed using a universal testing machine (product name: 4482 type commercially available from Instron) according to JIS K 7074.

The present invention will be described below in detail with reference to examples and comparative examples. However, the present invention is not limited to the following descriptions.

(Continuous carbon fiber bundle A)

Polyacrylonitrile carbon fiber precursor fibers having a single fiber fineness of 2.5 dtex and 24,000 filaments were subjected to a flameproofing treatment with heated air at 240 °C to 260 °C in a hot air circulation type flameproofing furnace, at an extension rate of+2% for 70 minutes, to obtain a flameproofing fiber bundle. Then, a low temperature heat treatment was performed under a nitrogen atmosphere at a maximum temperature of 660 °C at an extension rate of 3.0% for 1.5 minutes. In addition, a carbonization treatment was performed under a nitrogen atmosphere, in a high temperature heat treatment furnace with a maximum temperature of 1,350 °C, at an extension rate of -4.5% for about 1.5 minutes. A sizing agent 1 having a composition shown in Table 3 which is a highly dispersible sizing agent was adhered thereto by treatment to obtain a continuous carbon fiber bundle A. The single fiber fineness of the obtained continuous carbon fiber bundle A was 1.3 dtex, the roundness was 0.8, and an amount of the sizing agent 1 adhered was 1.0%. In addition, the strand tensile strength was 4,150 MPa, and the strand tensile elastic modulus was 249 GPa.

(Continuous carbon fiber bundle B)

A continuous carbon fiber bundle B was obtained in the same manner as above except that a sizing agent 2 having a composition shown in Table 3 was adhered in place of the sizing agent 1 adhered to the continuous carbon fiber bundle A. An amount of the sizing agent 2 adhered was 1.0%. The strand tensile strength and the strand tensile elastic modulus were similar to those of the continuous carbon fiber bundle A.

The sizing agent 2 was a sizing agent that did not contain the compound (C) among components including the compounds (A) to (D) included in the highly dispersible sizing agent, and the smoothness of the carbon fiber bundles which was a function of the compound (C) was impaired. Therefore, the smoothness between single fibers in the carbon fiber bundles disappeared and the fibers easily became bundled together.

In the following table 2, 1g/inch= 1g/25.4 mm.

[Example 1]

An SMC was prepared by the method of producing an SMC using the continuous carbon fiber bundle A, aggregates of the carbon fiber bundles were collected by this method, and a mass distribution of the carbon fiber bundles with respect to the mass of the carbon fiber bundles was formulated. A standard deviation of the roughness degree $\beta$ and the roughness degree $\beta$ of the obtained SMC was obtained.

Subsequently, the SMC was molded according to molding of the fiber-reinforced composite material. The obtained SMC molded product was subjected to a bending test according to the method of evaluating the fiber-reinforced composite material. The obtained results are shown in Fig. 1 and Tables 1 and 2.

[Example 2]

Example 2 was a reproducibility experiment of Example 1. An SMC was prepared using the continuous carbon fiber bundle A produced on another occasion according to the same method of producing an SMC as in Example 1, aggregates on the carbon fiber side were collected by this method, and a mass distribution of the carbon fiber bundles with respect to the mass of the carbon fiber bundles was measured. A standard deviation of the roughness degree $\beta$ and the roughness degree $\beta$ of the obtained SMC was obtained.

Subsequently, the SMC was molded according to molding of the fiber-reinforced composite material. The obtained SMC molded product was subjected to a bending test according to the method of evaluating the fiber-reinforced composite material. The obtained results are shown in Fig. 1 and Tables 1 and 2.

[Example 3]

In Example 3, an SMC was prepared using the same method of producing an SMC as in Example 1 except that the highly bundling sizing agent 2 was used in place of the sizing agent 1 and an adhesion amount was 0.4 wt%, aggregates on the carbon fiber side were collected by the method, and a mass distribution of the carbon fiber bundles with respect to the mass of the carbon fiber bundles was measured. A standard deviation of the roughness degree $\beta$ and the roughness degree $\beta$ of the obtained SMC was obtained.

Subsequently, the SMC was molded according to molding of the fiber-reinforced composite material. The obtained SMC molded product was subjected to a bending test according to the method of evaluating the fiber-reinforced composite material. The obtained results are shown in Fig. 1 and Tables 1 and 2.

In Fig. 1, in order to easily compare Examples 1 to 3 with Comparative Examples 1 to 6, when a total mass of carbon fiber bundles measured in each of Examples 1 to 3 and Comparative Examples 1 to 6 is set to 100%, a total mass of carbon fiber bundles included in each section is expressed in %.

[Comparative Example 1]

The bending test was performed in the same manner as in Example 1, that is except that a continuous carbon fiber bundle used was replaced with the continuous carbon fiber bundle B, and the highly bundling sizing agent 2 was used. The obtained results are shown in Fig. 1 and Tables 1 and 2.

[Comparative Example 2]

A mass distribution of carbon fiber bundles was measured and a bending test was performed in the same manner as in Example 1 except that a continuous carbon fiber bundle used was replaced with PYROFIL TRW40-50L (single fiber fineness of 0.75 dtex, 50,000 filaments, tensile strength of 4,120 MPa, tensile elastic modulus of 240 GPa,

sizing agent: K, and amount of sizing agent adhered: 1.4%, commercially available from Mitsubishi Rayon Co., Ltd.). The obtained results are shown in Fig. 1 and Tables 1 and 2.

[Comparative Example 3]

A mass distribution of carbon fiber bundles was measured and a bending test was performed in the same manner as in Example 1 except that a continuous carbon fiber bundle used was replaced with PYROFIL TR50S-15L (single fiber fineness of 0.67 dtex, 15,000 filaments, tensile strength of 4,900 MPa, a tensile elastic modulus of 240 GPa, sizing agent: A, and amount of sizing agent adhered: 1.0%, commercially available from Mitsubishi Rayon Co., Ltd.). The obtained results are shown in Fig. 1 and Tables 1 and 2.

[Comparative Example 4]

A mass distribution of carbon fiber bundles was measured and a bending test was performed in the same manner as in Example 1 except that a continuous carbon fiber bundle used was replaced with PYROFIL TRW40-50L (single fiber fineness of 0.75 dtex, 50,000 filaments, tensile strength of 4,120 MPa, and tensile elastic modulus of 240 GPa, commercially available from Mitsubishi Rayon Co., Ltd.), a sizing agent was replaced with the highly dispersible sizing agent 1, and an adhesion amount was 1.0%. The obtained results are shown in Fig. 1 and Tables 1 and 2.

[Comparative Example 5]

A mass distribution of carbon fiber bundles was measured and a bending test was performed in the same manner as in Example 1 except that a continuous carbon fiber bundle used was replaced with PYROFIL TR50S-15L (single fiber fineness of 0.67 dtex, 15,000 filaments, tensile strength of 4,900 MPa, and tensile elastic modulus of 240 GPa, commercially available from Mitsubishi Rayon Co., Ltd.), a sizing agent was replaced with the highly dispersible sizing agent 1, and an adhesion amount was 1.0%. The obtained results are shown in Fig. 1 and Tables 1 and 2.

[Comparative Example 6]

A mass distribution of carbon fiber bundles was measured and a bending test was performed in the same manner as in Example 3 except that an amount of sizing agent adhered was 0.8%. The obtained results are shown in Fig. 1 and Tables 1 and 2.

It was confirmed that Examples 1 to 3 had better mechanical properties than Comparative Examples 1 to 6.

[Table 1]

| | Fineness of single fiber constituting carbon fiber bundle (dtex) | Number of single fibers constituting continuous carbon fiber bundle (filaments) | Bending elastic modulus of fiber-reinforced composite material (GPa) |
|---|---|---|---|
| Example 1 | 1.3 | 24,000 | 25.5 |
| Example 2 | 1.3 | 24,000 | 25.0 |
| Example 3 | 1.3 | 24,000 | - |
| Comparative Example 1 | 1.3 | 24,000 | 14.9 |
| Comparative Example 2 | 0.75 | 50,000 | 19.0 |
| Comparative Example 3 | 0.67 | 15,000 | 24.5 |
| Comparative Example 4 | 0.75 | 50,000 | 18.5 |
| Comparative Example 5 | 0.67 | 15,000 | 24.7 |
| Comparative Example 6 | 1.3 | 24,000 | 18.1 |

[Table 2]

| | | Example 1 | Example 2 | Example 3 | Comparative Example 1 | Comparative Example 2 | Comparative Example 3 | Comparative Example 4 | Comparative Example 5 | Comparative Example 6 |
|---|---|---|---|---|---|---|---|---|---|---|
| Single fiber fineness | [dtex] | 1.3 | 1.3 | 1.3 | 1.3 | 0.75 | 0.67 | 0.75 | 0.67 | 1.3 |
| Number of filaments | [×1000 filaments] | 24 | 24 | 24 | 24 | 50 | 15 | 50 | 15 | 24 |
| Sizing agent | [-] | Sizing agent 1 | Sizing agent 1 | Sizing agent 2 | Sizing agent 2 | K | A | Sizing agent 1 | Sizing agent 1 | Sizing agent 2 |
| Amount of sizing agent adhered | [wt%] | 1.0 | 1.0 | 0.4 | 1.0 | 1.4 | 1.0 | 1.0 | 1.0 | 0.8 |
| Coefficient of dynamic friction | [-] | - | 1.32 | 1.51 | 1.54 | 1.71 | - | 1.34 | - | - |
| Thickness of continuous carbon fiber bundle | [mm] | 0.26 | 0.26 | 0.19 | 0.16 | 0.29 | - | 0.29 | 0.12 | - |
| Interlacing value per thickness of 1 mm of fiber bundle | [times] | 85.3 | 64.3 | 95.3 | 139.6 | 240.3 | - | 158.5 | 210.5 | - |
| Proportion of carbon fiber bundles with regard to mass of length of 1 inch belonging to each section [mass%] | 0 to 0.01 | 2.2 | 1.1 | 5.6 | 0.5 | 0.3 | 0.5 | 0 | 0.8 | 0.2 |

(continued)

| | | Example 1 | Example 2 | Example 3 | Comparative Example 1 | Comparative Example 2 | Comparative Example 3 | Comparative Example 4 | Comparative Example 5 | Comparative Example 6 |
|---|---|---|---|---|---|---|---|---|---|---|
| | 0.01 to 0.02 | 10.5 | 10.4 | 18.8 | 2.6 | 1.0 | 14.4 | 0.3 | 12.4 | 4.6 |
| | 0.02 to 0.03 | 15.2 | 15.2 | 16.8 | 5.1 | 1.8 | 81.3 | 0.4 | 86.4 | 33.2 |
| | 0.03 to 0.04 | 18.7 | 19.4 | 17.3 | 5.3 | 2.5 | 0.8 | 2.3 | 0.4 | 6.5 |
| | 0.04 to 0.05 | 16.2 | 18.4 | 11.1 | 8.4 | 3.4 | 0.0 | 6.3 | 0.0 | 4.3 |
| | 0.05 to 006 | 11.0 | 11.8 | 12.2 | 6.1 | 5.1 | 0.0 | 4.7 | 0.0 | 3.5 |
| | 0.06 to 0.07 | 9.3 | 5.1 | 5.9 | 6.3 | 2.6 | 0.0 | 6.9 | 0.0 | 2.7 |
| | 0.07 to 0.08 | 5.2 | 3.5 | 2.4 | 6.5 | 6.1 | 0.0 | 10.4 | 0.0 | 4.8 |
| | 0.08 to 0.09 | 10.6 | 15.1 | 9.9 | 41.0 | 4.0 | 0.0 | 5.4 | 0.0 | 34.6 |
| | 0.09 to 0.10 | 0.3 | 1.6 | 0.0 | 17.6 | 68.8 | 0.0 | 54.5 | 0.0 | 5.6 |
| | 0.10 to 0.11 | 0.9 | 0.0 | 0.0 | 0.6 | 4.5 | 0.0 | 8.9 | 0.0 | 0.0 |
| Mode value | [g/inch] | 0.035 | 0.035 | 0.015 | 0.085 | 0.095 | 0.025 | 0.095 | 0.025 | 0.085 |
| (Mode value)÷(mass of carbon fiber bundle with largest mass) ×100 | [%] | 33.3 | 36.8 | 15.8 | 81.0 | 90.5 | 71.4 | 90.5 | 71.4 | 81.0 |
| Half-value width | [-] | 0.050 | 0.044 | 0.051 | 0.015 | Less than 0.15 | Less than 0.15 | Less than 0.15 | Less than 0.15 | Less than 0.15 |

(continued)

| | | Example 1 | Example 2 | Example 3 | Comparative Example 1 | Comparative Example 2 | Comparative Example 3 | Comparative Example 4 | Comparative Example 5 | Comparative Example 6 |
|---|---|---|---|---|---|---|---|---|---|---|
| Roughness degree β of SMC | [-] | 4.1 | - | - | - | - | 5.9 | - | - | - |
| Standard deviation of roughness degree β | [-] | 0.8 | - | - | - | - | 2.0 | - | - | - |

[Table 3]

| | | Sizing agent 1 | Sizing agent 2 |
|---|---|---|---|
| Compound (A) | A2 | 25 | 28 |
| Compound (B) | CN981 | 14 | 20 |
| Compound (C) | Stearyl stearate | 15 | - |
| Compound (D) | Newcol 723 | 15 | 15 |
| | Fine Surf FON180E06 | 3 | 2 |
| Compound (E) | E1 | 14 | 17 |
| | E2 | 14 | 18 |

In Table 3, more specifically, A2, E1 and E2 are synthesized products obtained by the following procedures.

Compound (A), one end acrylic acid-modified diglycidyl ether bisphenol A

Here, in A2, 1/2 thereof was a half ester component effective as the compound (A), the remaining 1/2 being unreacted substances and a diester substance. A formulation amount of A2 shown in Table 3 represents a total amount of the half ester component, the unreacted substances, and the diester substance. Therefore, an amount of an active component as a half ester was 1/2 of the formulation amount in Table 3. That is, when a content of the compound (A) in the sizing agent was calculated, half of a value of the formulation amount of A2 shown in the table was used. However, an amount of the entire sizing components included not only a formulation amount of the half ester component but also a formulation amount of the unreacted substances and the diester substance. That is, in order to calculate an amount of the entire sizing components, a value of the formulation amount of A2 shown in the table was used.

A2: mixture of JER834/JER834 one end acrylic modified epoxy resin (half ester)/JER834 both ends acrylic modified epoxy resin (diester) with a mixture mass ratio of 1/2/1 obtained by adding 86 parts by mass of acrylic acid, 1 part by mass of hydroquinone, and 1 part by mass of lithium chloride with respect to 1,000 parts by mass of a bisphenol A type epoxy resin (product name: JER834 commercially available from Japan epoxy resin), and heating and reacting at 100 °C.

Compound (E), preparation of polyester

E1: 800 parts by mass of a bisphenol A PO adduct (product name: New Pole BP-3P commercially available from Sanyo Chemical Industries, Ltd.) obtained by adding 3 parts by mole of PO (propylene oxide) to 1 part by mole of bisphenol A, 278 parts by mass of fumaric acid (alcohol/acid =1/1.2 molar ratio) and 1 part by mass of tetraisopropoxy titanate were depressurized to -0.1 MPa (gauge pressure) in a glass reaction container under a nitrogen flow at 180 °C, and reacted for 10 hours while distilling off water, thereby obtaining E1.

E2: 400 parts by mass of a bisphenol A PO adduct (product name: New Pole BP-3P commercially available from Sanyo Chemical Industries, Ltd.) obtained by adding 3 parts by mole of PO to 1 part by mole of bisphenol A, 139 parts by mass (alcohol/acid =1/1.2 molar ratio) of fumaric acid and 1 part by mass of tetraisopropoxy titanate were reacted for 10 hours in a glass reaction container under a nitrogen flow at 180 °C while distilling off water. In addition, 668 parts by mass of a bisphenol A EO adduct (product name: New Pole BPE-100 commercially available from Sanyo Chemical Industries, Ltd.) obtained by adding 10 parts by mole of EO (ethylene oxide) to 1 part by mole of bisphenol A were depressurized to -0.1 MPa (gauge pressure) at 180 °C and reacted for 10 hours while distilling off water, thereby obtaining E2.

[Industrial Applicability]

When the continuous carbon fiber bundle of the present invention is used, it is possible to easily produce a sheet molding compound of the present invention, and when molding is performed using the SMC of the present invention, it is possible to obtain a fiber-reinforced composite material exhibiting favorable mechanical properties.

[Reference Signs List]

1 Drive roller
2 to 5 Free roller
6 Load measuring device
7 Weight
8 Continuous carbon fiber
9 Cutter blade
10 Pressing roller

## Claims

1. A continuous carbon fiber bundle including carbon fibers with a single fiber fineness of 1.0 dtex or more and 2.4 dtex or less,
wherein a mode value in a mass distribution of carbon fiber bundles with respect to a mass of individual carbon fiber bundles obtained when small pieces obtained by cutting the continuous carbon fiber bundle at intervals of 25.4 mm while the width of the continuous carbon fiber bundle is maintained are dropped on a horizontal plane from a height of 1 m is 50% or less of the mass of a carbon fiber bundle with the largest mass.

2. A continuous carbon fiber bundle including carbon fibers with a single fiber fineness of 1.0 dtex or more and 2.4 dtex or less,
wherein a half-value width in a mass distribution of carbon fiber bundles with respect to the mass per unit length of individual carbon fiber bundles obtained when small pieces obtained by cutting the continuous carbon fiber bundle at intervals of 25.4 mm while the width of the continuous carbon fiber bundle is maintained are dropped on a horizontal plane from a height of 1 m is 0.03 g/25.4 mm (g/inch) or more.

3. The continuous carbon fiber bundle according to claim 1 or 2,
wherein a roundness of a cross section perpendicular to a fiber axis of single fibers of the carbon fibers is 0.7 or more and 0.9 or less.

4. The continuous carbon fiber bundle according to anyone of claims 1 to 3,
wherein a coefficient of dynamic friction with respect to a hard chrome-plated surface with an arithmetic average roughness (Ra) of 0.63 $\mu$m, a maximum height (Rmax) of 6.8 $\mu$, a ten-point average roughness (Rz) of 5.45 $\mu$m, an average peak height (Rpm) of 2.11 $\mu$m, and a peak count (Pc) of 24.2 measured according to JIS B 0601 is 1.4 or less and a total fineness is 50,000 dtex or more.

5. The continuous carbon fiber bundle according to any one of claims 1 to 4,
wherein an interlacing value per thickness of 1 mm of the fiber bundle is 100 or less.

6. The continuous carbon fiber bundle according to any one of claims 1 to 5 including a sizing agent that satisfies the following (1) to (4),

(1) the sizing agent includes the following (A) to (D),
a compound (A), which is an ester compound of an epoxy compound having a plurality of epoxy groups in a molecule and an unsaturated monobasic acid, having at least one epoxy group in a molecule,
a bifunctional type urethane acrylate oligomer compound (B) imparting a tensile elongation of 40% or more to a cured product,
a stearic acid ester compound (C), and
a surfactant (D),
(2) a content mass ratio between the compound (A) and the urethane acrylate oligomer (B) is 1/3 or more and 2/1 or less as a ratio of the urethane acrylate oligomer (B)/the compound (A),
(3) a proportion of the total amount of the compound (A) and the urethane acrylate oligomer (B) in the entire sizing components is 20 mass% or more, and
(4) a proportion of the stearic acid ester compound (C) in the entire sizing components is 5 mass% or more and 30 mass% or less.

7. A sheet molding compound comprising a carbon fiber bundle including carbon fibers with a single fiber fineness of 1.0 dtex or more and 2.4 dtex or less and a matrix resin composition,
wherein a mode value in a mass distribution of carbon fiber bundles with respect to a mass of individual carbon fiber

bundles is 50% or less of the mass of the carbon fiber bundle with the largest mass.

8. A sheet molding compound comprising a carbon fiber bundle including carbon fibers with a single fiber fineness of 1.0 dtex or more and 2.4 dtex or less and a matrix resin composition, wherein a half-value width in a mass distribution of carbon fiber bundles with respect to the mass per unit length of individual carbon fiber bundles is 0.03 g/25.4 mm (g/inch) or more.

9. The sheet molding compound according to claim 7 or 8, wherein a roundness of a cross section perpendicular to a fiber axis of single fibers of the carbon fibers constituting the carbon fiber bundle is 0.7 or more and 0.9 or less.

10. The sheet molding compound according to any one of claims 7 to 9, wherein when diffracted X-rays with a diffraction angle 2θ of 25.4° are detected by an X-ray diffraction method, a roughness degree β obtained by the following Formulae (1) to (3) is 4.5 or less, and a standard deviation of the roughness degree β is 1.5 or less.
[Math. 1]

$$\text{Roughness degree } \beta = \int_0^{360} |f(\phi)|\,d\phi \times \frac{1}{360} = \left(\sum_{i=2}^{N} (|f(\phi_i)| + |f(\phi_{i-1})|) \times d\phi \times \frac{1}{2}\right) \times \frac{1}{360} \quad \cdots (1)$$

Here, in the above formula, $f(\phi_i)$ denotes a luminance obtained by subtracting an average luminance from a luminance ($I(\varphi_i)$) at i-th rotation angle ($\phi_i$) in X-ray diffraction measurement, which is represented by the following Formula (2), and $d\varphi$ denotes a step width of X-ray diffraction measurement. $I(\varphi_i)$ is normalized such that an integrated intensity becomes 10,000, which is represented by the following Formula (3).
[Math. 2]

$$f(\phi_i) = I(\phi_i) - \frac{\sum_{i=1}^{N} I(\phi_i)}{N} \quad \cdots (2)$$

$$\int_0^{360} I(\phi)\,d\phi = \sum_{i=2}^{N} \left(I(\phi_i) + I(\phi_{i-1})\right) \times d\phi \times \frac{1}{2} = 10000 \quad \cdots (3)$$

11. A fiber-reinforced composite material molded using the sheet molding compound according to any one of claims 7 to 10.

## Patentansprüche

1. Kontinuierliches Kohlenstofffaserbündel, das Kohlenstofffasern mit einer Einzelfaserfeinheit von 1,0 dtex oder mehr und 2,4 dtex oder weniger enthält, wobei ein Modalwert in einer Massenverteilung von Kohlenstofffaserbündeln in Bezug auf eine Masse einzelner Kohlenstofffaserbündel, die erhalten werden, wenn kleine Stücke, die durch Schneiden des kontinuierlichen Kohlenstofffaserbündels in Intervallen von 25,4 mm unter Beibehaltung der Breite des kontinuierlichen Kohlenstofffaserbündels erhalten werden, auf eine horizontale Ebene aus einer Höhe von 1 m fallen gelassen werden, 50% oder weniger der Masse eines Kohlenstofffaserbündels mit der größten Masse beträgt.

2. Kontinuierliches Kohlenstofffaserbündel, das Kohlenstofffasern mit einer Einzelfaserfeinheit von 1,0 dtex oder mehr und 2,4 dtex oder weniger enthält, wobei eine Halbwertsbreite in einer Massenverteilung von Kohlenstofffaserbündeln in Bezug auf die Masse der einzelnen Kohlenstofffaserbündel, die erhalten werden, wenn kleine Stücke, die durch Schneiden des kontinuierlichen Kohlenstofffaserbündels in Intervallen von 25,4 mm unter Beibehaltung der Breite des kontinuierlichen Kohlenstofffaserbündels erhalten werden, auf eine horizontale Ebene aus einer Höhe von 1 m fallen gelassen werden, 0,03 g/25,4 mm (g/Zoll) oder mehr beträgt.

**3.** Kontinuierliches Kohlenstofffaserbündel gemäß Anspruch 1 oder 2,
wobei eine Rundheit eines Querschnitts senkrecht zu einer Faserachse von Einzelfasern der Kohlenstofffasern 0,7 oder mehr und 0,9 oder weniger beträgt.

**4.** Kontinuierliches Kohlenstofffaserbündel gemäß mindestens einem der Ansprüche 1 bis 3,
wobei ein dynamischer Reibungskoeffizient in Bezug auf eine hartverchromte Oberfläche mit einer arithmetischen Durchschnittsrauhigkeit (Ra) von 0,63 $\mu$m, einer maximalen Höhe (Rmax) von 6,8 $\mu$, einer durchschnittlichen Zehn-Punkt-Rauhigkeit (Rz) von 5,45 $\mu$m, einer durchschnittlichen Peakhöhe (Rpm) von 2,11 $\mu$m und einer Spitzenzahl (Pc; "peak count") von 24,2, gemessen gemäß JIS B 0601, 1,4 oder weniger beträgt und eine Gesamtfeinheit 50000 dtex oder mehr beträgt.

**5.** Kontinuierliches Kohlenstofffaserbündel gemäß mindestens einem der Ansprüche 1 bis 4,
wobei ein Verflechtungswert ("interlacing value") pro Dicke von 1 mm des Faserbündels 100 oder weniger beträgt.

**6.** Kontinuierliches Kohlenstofffaserbündel gemäß mindestens einem der Ansprüche 1 bis 5, das ein Leimungsmittel, welches die folgenden Punkte (1) bis (4) erfüllt, umfasst

(1) das Leimungsmittel umfasst die folgenden Komponenten (A) bis (D),
eine Verbindung (A), die eine Esterverbindung aus einer Epoxyverbindung mit einer Vielzahl von Epoxygruppen in einem Molekül und einer ungesättigten monobasischen Säure mit mindestens einer Epoxygruppe in einem Molekül ist,
eine bifunktionelle Urethanacrylat-Oligomer-Verbindung (B), die einem ausgehärteten Produkt eine Zugdehnung von 40% oder mehr verleiht,
eine Stearinsäureesterverbindung (C) und
ein Tensid (D),
(2) das Massenverhältnis zwischen der Verbindung (A) und dem Urethanacrylat-Oligomer (B) als Verhältnis Urethanacrylat-Oligomer (B)/Verbindung (A) beträgt 1/3 oder mehr und 2/1 oder weniger,
(3) ein Anteil der Gesamtmenge der Verbindung (A) und des Urethanacrylat-Oligomers (B) in Bezug auf die gesamten Leimungskomponenten beträgt 20 Massen-% oder mehr und
(4) ein Anteil der Stearinsäureesterverbindung (C) in Bezug auf die gesamten Leimungskomponenten beträgt 5 Massen-% oder mehr und 30 Massen-% oder weniger.

**7.** Harzmatte, umfassend ein Kohlenstofffaserbündel, das Kohlenstofffasern mit einer Einzelfaserfeinheit von 1,0 dtex oder mehr und 2,4 dtex oder weniger und eine Matrixharzzusammensetzung umfasst,
wobei ein Modalwert in einer Massenverteilung von Kohlenstofffaserbündeln in Bezug auf eine Masse der einzelnen Kohlenstofffaserbündel 50 % oder weniger der Masse des Kohlenstofffaserbündels mit der größten Masse beträgt.

**8.** Harzmatte, umfassend ein Kohlenstofffaserbündel, das Kohlenstofffasern mit einer Einzelfaserfeinheit von 1,0 dtex oder mehr und 2,4 dtex oder weniger und eine Matrixharzzusammensetzung umfasst,
wobei eine Halbwertsbreite in einer Massenverteilung von Kohlenstofffaserbündeln in Bezug auf die Masse pro Längeneinheit der einzelnen Kohlenstofffaserbündel 0,05 g/25,4 mm (g/Zoll) oder mehr beträgt.

**9.** Harzmatte gemäß Anspruch 7 oder 8,
wobei eine Rundheit eines Querschnitts senkrecht zu einer Faserachse von Einzelfasern der Kohlenstofffasern 0,7 oder mehr und 0,9 oder weniger beträgt.

**10.** Harzmatte gemäß mindestens einem der Ansprüche 7 bis 9,
wobei, wenn gebeugte Röntgenstrahlen mit einem Beugungswinkel 2$\theta$ von 25,4° durch ein Röntgenbeugungsverfahren erfasst werden, ein durch die folgenden Formeln (1) bis (3) erhaltener Rauheitsgrad $\beta$ 4,5 oder weniger und eine Standardabweichung des Rauheitsgrades $\beta$ 1,5 oder weniger beträgt.
[Mathematische Formel 1]

Rauheitsgrad β =

$$\int_0^{360} |f(\phi)|\,d\phi \times \frac{1}{360} = \left(\sum_{i=2}^{N}(|f(\phi_i)| + |f(\phi_{i-1})|) \times d\phi \times \frac{1}{2}\right) \times \frac{1}{360} \quad \cdots (1)$$

wobei in der obigen Formel f($\varphi_i$), die durch die folgende Formel (2) dargestellt wird, für eine Luminanz steht, die bei der Röntgenbeugungsmessung durch Subtraktion einer mittleren Luminanz von einer Luminanz (I($\varphi_i$)) bei i-tem Drehwinkel ($\varphi_i$) erhalten wird und d$\varphi$ für eine Schrittweite der Röntgenbeugungsmessung steht, wobei I($\varphi_i$) so normiert wird, dass eine integrierte Intensität bei 10000 liegt, was durch die folgende Formel (3) dargestellt wird.
[Mathematische Formel 2]

$$f(\phi_i) = I(\phi_i) - \frac{\sum_{i=1}^{N} I(\phi_i)}{N} \quad \cdots (2)$$

$$\int_0^{360} I(\phi)\,d\phi = \sum_{i=2}^{N}\left(I(\phi_i) + I(\phi_{i-1})\right) \times d\phi \times \frac{1}{2} = 10000 \quad \cdots (3)$$

**11.** Faserverstärkter Verbundwerkstoff, der unter Verwendung der Harzmatte gemäß mindestens einem der Ansprüche 7 bis 10 geformt wird.

## Revendications

**1.** Faisceau de fibres de carbone continues incluant des fibres de carbone avec une finesse de fibre unitaire de 1,0 dtex ou plus et de 2,4 dtex ou moins,
dans lequel une valeur de mode dans une distribution de masse de faisceaux de fibres de carbone par rapport à une masse de faisceaux de fibres de carbone individuels obtenus lorsque des petits morceaux obtenus en coupant le faisceau de fibres de carbone continues à des intervalles de 25,4 mm tandis que la largeur du faisceau de fibres de carbone continues est maintenue sont laissés tomber sur un plan horizontal depuis une hauteur de 1 m est de 50 % ou moins de la masse d'un faisceau de fibres de carbone avec la masse la plus grande.

**2.** Faisceau de fibres de carbone continues incluant des fibres de carbone avec une finesse de fibre unitaire de 1,0 dtex ou plus et de 2,4 dtex ou moins,
dans lequel une largeur de demi-valeur dans une distribution de masse de faisceaux de fibres de carbone par rapport à la masse de faisceaux de fibres de carbone individuels obtenus lorsque des petits morceaux obtenus en coupant le faisceau de fibres de carbone continues à des intervalles de 25,4 mm tandis que la largeur du faisceau de fibres de carbone continues est maintenue sont laissés tomber sur un plan horizontal depuis une hauteur de 1 m est de 0,03 g/25,4 mm (g/pouce) ou plus.

**3.** Faisceau de fibres de carbone continu selon la revendication 1 ou 2,
dans lequel une rondeur d'une section transversale perpendiculaire à un axe de fibre de fibres unitaires des fibres de carbone est de 0,7 ou plus et de 0,9 ou moins.

**4.** Faisceau de fibres de carbone continu selon l'une quelconque des revendications 1 à 3,
dans lequel un coefficient de frottement dynamique par rapport à une surface chromée dure avec une rugosité moyenne arithmétique (Ra) de 0,63 μm, une hauteur maximale (Rmax) de 6,8 μ, une rugosité moyenne en dix points (Rz) de 5,45 μm, une hauteur moyenne de pic (Rpm) de 2,11 μm, et un nombre de pics (Pc) de 24,2 mesuré selon JIS B 0601 est de 1,4 ou moins et une finesse totale est de 50 000 dtex ou plus.

**5.** Faisceau de fibres de carbone continues selon l'une quelconque des revendications 1 à 4,
dans lequel une valeur d'entrelacement par épaisseur de 1 mm du faisceau de fibres est de 100 ou moins.

**6.** Faisceau de fibres de carbone continues selon l'une quelconque des revendications 1 à 5 incluant un agent de dimensionnement qui satisfait aux points (1) à (4) suivants,

(1) l'agent de dimensionnement inclut les composés (A) à (D) suivants,
un composé (A), qui est un composé d'ester d'un composé époxy présentant une pluralité de groupes époxy dans une molécule et un acide monobasique insaturé, présentant au moins un groupe époxy dans une molécule,
un composé d'oligomère d'acrylate d'uréthane de type bifonctionnel (B) dotant un produit durci d'un allongement à la traction de 40 % ou plus,
un composé d'ester d'acide stéarique (C), et
un tensioactif (D),
(2) un rapport massique de teneur entre le composé (A) et l'oligomère d'acrylate d'uréthane (B) est de 1/3 ou plus et de 2/1 ou moins comme rapport de l'oligomère d'acrylate d'uréthane (B)/le composé (A),
(3) une proportion de la quantité totale du composé (A) et de l'oligomère d'acrylate d'uréthane (B) dans l'ensemble des composants de dimensionnement est de 20 % en masse ou plus, et
(4) une proportion du composé d'ester d'acide stéarique (C) dans l'ensemble des composants de dimensionnement est de 5 % en masse ou plus et de 30 % en masse ou moins.

**7.** Composé de moulage en feuille comprenant un faisceau de fibres de carbone incluant des fibres de carbone avec une finesse de fibre unitaire de 1,0 dtex ou plus et de 2,4 dtex ou moins et une composition de résine de matrice, dans lequel une valeur de mode dans une distribution de masse de faisceaux de fibres de carbone par rapport à une masse de faisceaux de fibres de carbone individuels est de 50 % ou moins de la masse du faisceau de fibres de carbone avec la masse la plus grande.

**8.** Composé de moulage en feuille comprenant un faisceau de fibres de carbone incluant des fibres de carbone avec une finesse de fibre unitaire de 1,0 dtex ou plus et de 2,4 dtex ou moins et une composition de résine de matrice, dans lequel une largeur de demi-valeur dans une distribution de masse de faisceaux de fibres de carbone par rapport à la masse par unité de longueur de faisceaux de fibres de carbone individuels est de 0,05 g/25,4 mm (g/pouce) ou plus.

**9.** Composé de moulage en feuille selon la revendication 7 ou 8,
dans lequel une rondeur d'une section transversale perpendiculaire à un axe de fibre de fibres unitaires des fibres de carbone constituant le faisceau de fibres de carbone est de 0,7 ou plus et de 0,9 ou moins.

**10.** Composé de moulage en feuille selon l'une quelconque des revendications 7 à 9,
dans lequel lorsque des rayons X diffractés avec un angle de diffraction 2θ de 25,4° sont détectés par un procédé de diffraction de rayons X, un degré de rugosité β obtenu par les Formules (1) à (3) suivantes est de 4,5 ou moins, et un écart type du degré de rugosité β est de 1,5 ou moins.
[Formule mathématique 1]

$$\text{Degré de rugosité } \beta = \int_0^{360} |f(\phi)|\, d\phi \times \frac{1}{360} = \left(\sum_{i=2}^{N} (|f(\phi_i)| + |f(\phi_{i-1})|) \times d\phi \times \frac{1}{2}\right) \times \frac{1}{360} \quad \cdots (1)$$

Ici, dans la formule ci-dessus, $f(\varphi_i)$ désigne une luminance obtenue en soustrayant une luminance moyenne d'une luminance ($I(\varphi_i)$) à un $i^e$ angle de rotation ($\phi_i$) dans une mesure de diffraction de rayons X, qui est représentée par la Formule (2) suivante, et $d\varphi$ désigne une largeur d'étape d'une mesure de diffraction de rayons X. $I(\varphi_i)$ est normalisé de sorte qu'une intensité intégrée devienne 10 000, qui est représentée par la Formule (3) suivante.
[Formule mathématique 2]

$$f(\phi_i) = I(\phi_i) - \frac{\sum_{i=1}^{N} I(\phi_i)}{N} \quad \cdots (2)$$

$$\int_0^{360} I(\phi)\,\mathrm{d}\phi = \sum_{i=2}^{N} \left(I(\phi_i) + I(\phi_{i-1})\right) \times \mathrm{d}\phi \times \frac{1}{2} = 10000 \cdots (3)$$

.

**11.** Matériau composite renforcé de fibres moulé en utilisant le composé de moulage en feuille selon l'une quelconque des revendications 7 à 10.

FIG. 1

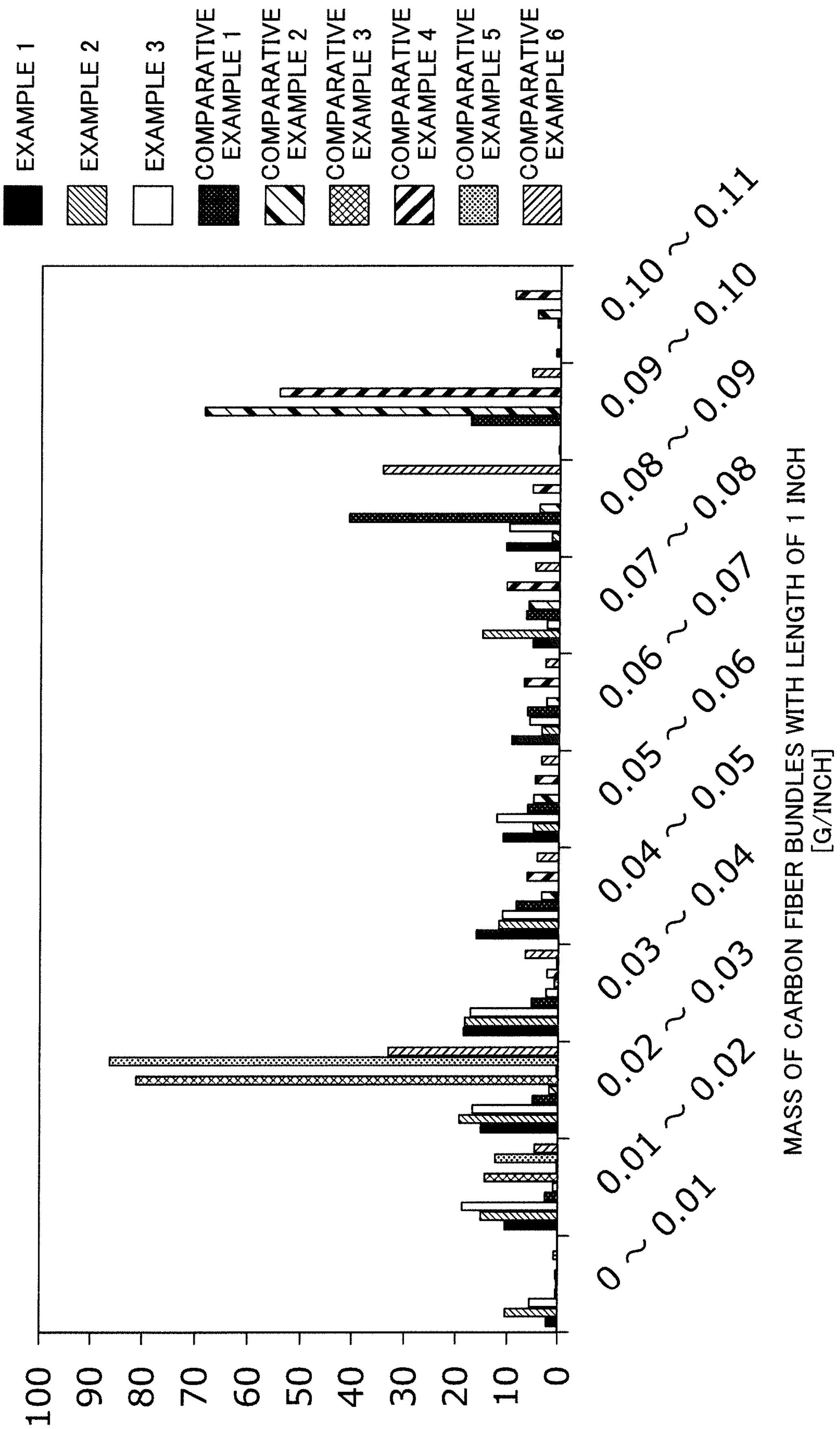
EXAMPLE 1
EXAMPLE 2
EXAMPLE 3
COMPARATIVE EXAMPLE 1
COMPARATIVE EXAMPLE 2
COMPARATIVE EXAMPLE 3
COMPARATIVE EXAMPLE 4
COMPARATIVE EXAMPLE 5
COMPARATIVE EXAMPLE 6
100
90
80
70
60
50
40
30
20
10
0
0 ~ 0.01
0.01 ~ 0.02
0.02 ~ 0.03
0.03 ~ 0.04
0.04 ~ 0.05
0.05 ~ 0.06
0.06 ~ 0.07
0.07 ~ 0.08
0.08 ~ 0.09
0.09 ~ 0.10
0.10 ~ 0.11
MASS OF CARBON FIBER BUNDLES WITH LENGTH OF 1 INCH [G/INCH]

FIG. 2

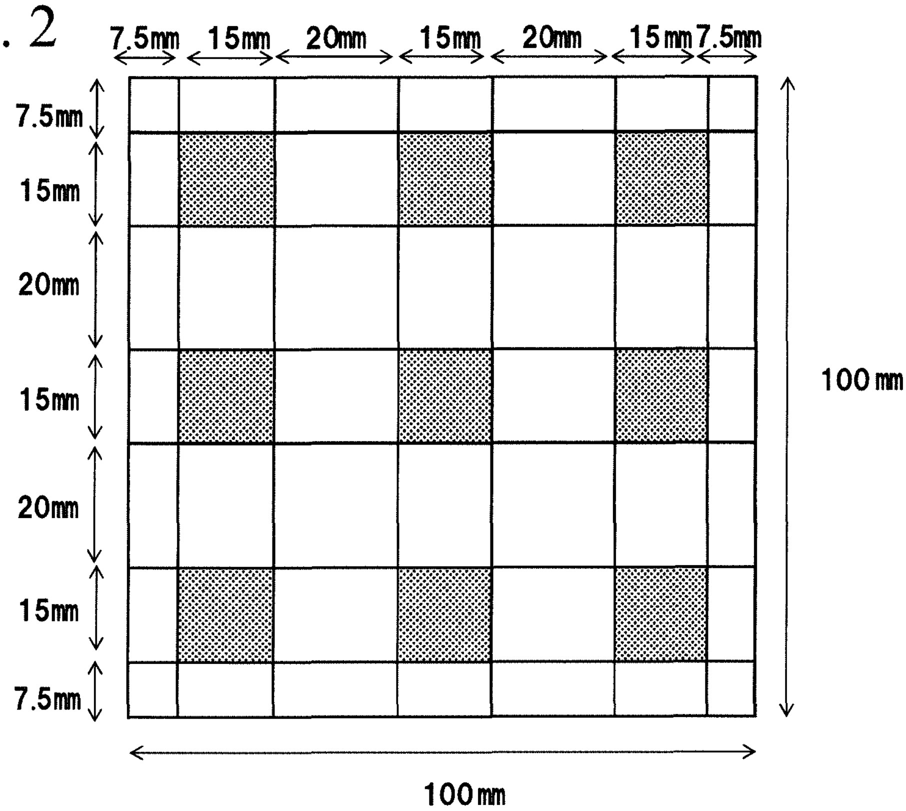
7.5mm
15mm
20mm
15mm
20mm
15mm
7.5mm
7.5mm
15mm
20mm
15mm
20mm
15mm
7.5mm
100mm
100mm

FIG. 3

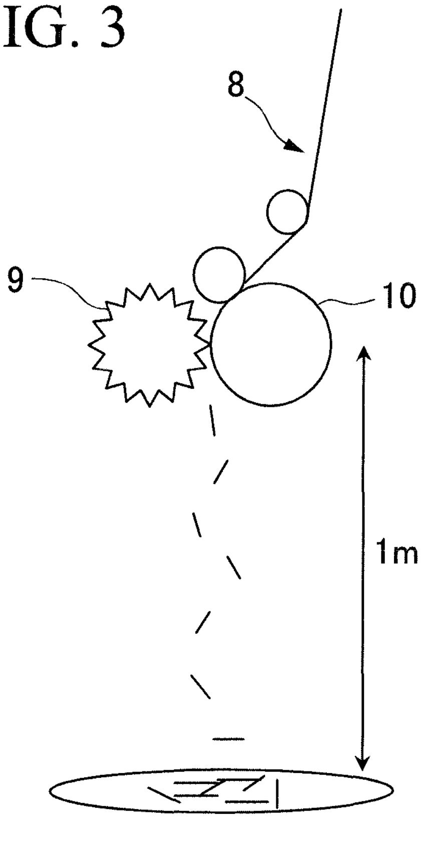
8
9
10
1m

FIG. 4

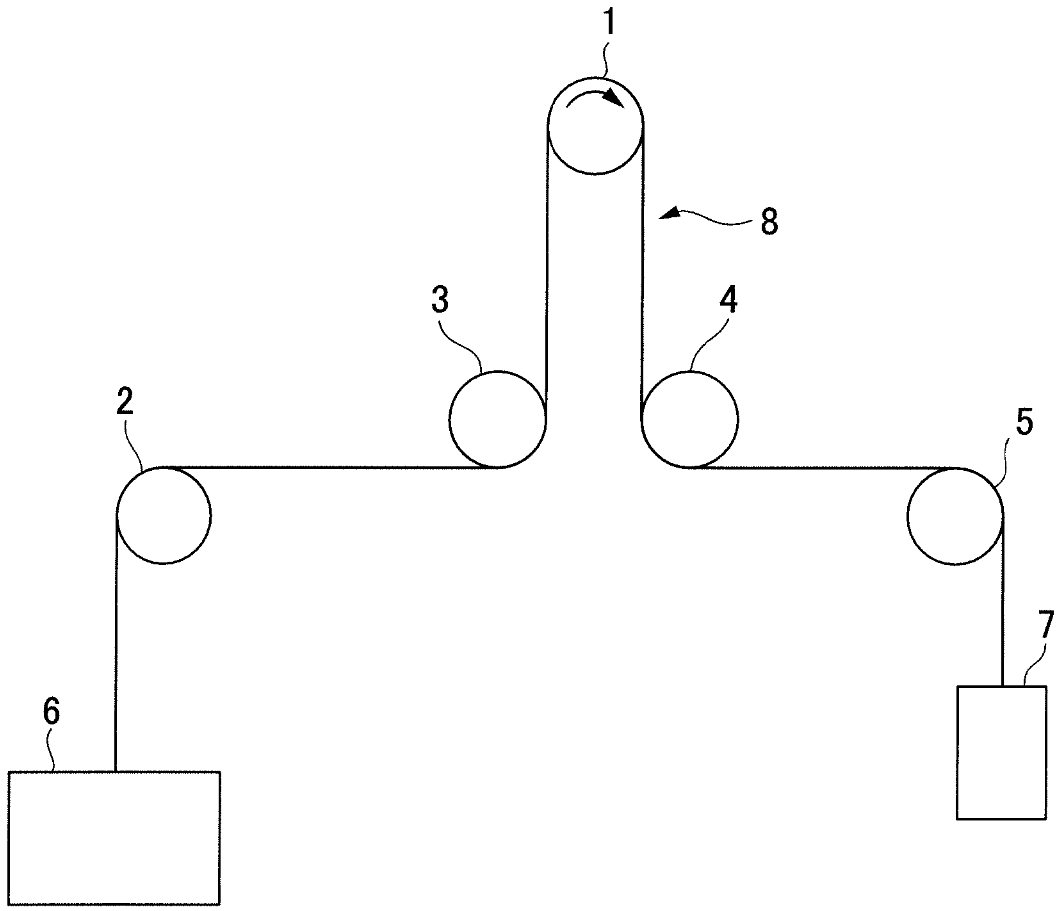

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2015217697 A
- JP 2016169560 A
- JP 2013202890 A
- JP 2012246583 A
- JP H1181146 A
- JP 2016160549 A


### Non-patent literature cited in the description


- **N. TSUCHIYAMA.** The Mechanical Properties of Carbon Fiber SMC. *Proceedings of the Fourth International Conference on Composite Materials ICCM-IV,* 1982, 497-503